# EUROPEAN PATENT APPLICATION

(11) **EP 4 686 437 A1**
(43) Date of publication of application: **04.02.2026**
(21) Application number: 25192673.9
(22) Date of filing: 30.07.2025
(51) Int. Cl.: A47J 31/44, A47J 31/46, A47J 31/52

(54) **CONTROL METHOD FOR MILK BEVERAGE DISPENSING SYSTEM AND BEVERAGE MACHINE**

(30) Priority: 31.07.2024 CN 202411044753
(71) Applicant: Kalerm Technology (Suzhou) Co., Ltd, Suzhou Jiangsu 215134 (CN)
(72) Inventor: DUAN, Yafei, Suzhou, Jiangsu 215134 (CN); YANG, Xin, Suzhou, Jiangsu 215134 (CN); YIN, Niannian, Suzhou, Jiangsu 215134 (CN)
(74) Representative: Winter, Brandl - Partnerschaft mbB

(57) **Abstract**

A control method for a milk beverage dispensing system and a beverage machine. The dispensing system includes: a mixing device, including a mixing chamber, the mixing chamber having a steam inlet, a fluid inlet and a discharge outlet; a steam generator, connected to the steam inlet; a hydraulic pump, connected between a milk supply source and the fluid inlet; the control method includes the following steps: receiving a milk beverage preparation signal; when determining that the signal is a beverage mode indicating steam output, controlling a pressure relief pipeline of the steam generator to open for a first preset duration, and controlling the steam generator to heat up during the first preset duration; after the first preset duration, controlling the hydraulic pump to activate, and controlling the steam generator to deliver the steam to the mixing chamber, wherein the steam enters the mixing chamber not later than the milk liquid.

## Description

### TECHNICAL FIELD

The present application relates to the field of beverage apparatus, particularly to a control method for a milk beverage dispensing system and a beverage machine.

### BACKGROUND

Coffee machines suitable for preparing coffee mixed beverages, especially fully automatic coffee machines. Such coffee mixed beverages (for example, cappuccino, latte macchiato, etc.) contain a certain proportion of milk to varying degrees.

To improve operational convenience, it is common practice to provide these coffee machines with a milk preparation system that heats the provided milk. For this purpose, milk is provided in a separate cooling container and is supplied to the milk inlet of the milk preparation system via a milk delivery pipeline.

Although the milk preparation system can produce milk beverages at different temperatures, for beverages with high temperature requirements, the uncontrollable heating process due to factors such as milk temperature and ambient temperature results in output beverage temperatures that cannot meet user requirements, affecting user experience.

### SUMMARY

An object of the present invention is to provide a control method for milk beverage dispensing system that can enhance the user experience.

Another object of the present invention is to provide a beverage machine that can enhance the user experience.

The present application provides a control method for a milk beverage dispensing system and a beverage machine. The invention is defined by the appended set of claims.

### BRIEF DESCRIPTION OF THE DRAWINGS

Fig. 1 is a schematic diagram of one embodiment of the milk beverage dispensing system of the present application.
Fig. 2 is an enlarged schematic diagram of the dotted box a in Fig. 1.
Fig. 3 is a flow chart of the control method for the milk beverage dispensing system in Fig. 1.
Fig. 4 is a flow chart of one embodiment of the control method in Fig. 3.
Fig. 5 is a flow chart of another embodiment of the control method in Fig. 3.
Fig. 6 is a flow chart of yet another embodiment of the control method in Fig. 3.
Fig. 7 is a schematic diagram of another embodiment of the milk beverage dispensing system of the present application.
Fig. 8 is a flow chart of the control method of the milk beverage dispensing system in Fig. 7.
Fig. 9 is a perspective view of a mixing device of the milk beverage dispensing system in Fig. 1.
Fig. 10 is a sectional view of the mixing device in Fig. 9.
Fig. 11 is an enlarged view of the portion enclosed by the dashed line of the mixing device in Fig. 10.
Fig. 12 is an exploded view of the mixing device in Fig. 10.
Fig. 13 is a sectional view along line A-A of the mixing device shown in Fig. 10.
Fig. 14 is a sectional view along line B-B of the mixing device shown in Fig. 10.
Fig. 15 is a schematic view of another structure of the mixing device shown in Fig. 10.
Fig. 16 is a sectional view of another embodiment of the mixing device of the milk beverage dispensing system in Fig. 1.
Fig. 17 is a perspective view of a mixer of the mixing device in Fig. 16.
Fig. 18 is a sectional view along line C-C of the mixing device shown in Fig. 16.
Fig. 19 is a sectional view along line D-D of the mixing device shown in Fig. 16.
Fig. 20 is a sectional view along line E-E of the mixing device shown in Fig. 16.
Fig. 21 is a schematic view of another embodiment of the mixing device shown in Fig. 16.
Fig. 22 is a schematic view of yet another embodiment of the mixing device shown in Fig. 16.
Fig. 23 is a schematic view of still another embodiment of the mixing device shown in Fig. 16.

### DETAILED DESCRIPTION

As used herein, the terms first, second, etc. may be used to describe various components or structures, but these described objects should not be limited by the above terms. The above terms are only used to distinguish these described objects from each other. The terms "upstream" and "downstream" refer to the relative direction with respect to fluid flow in a fluid passage. For example, "upstream" refers to the direction from which fluid flows, while "downstream" refers to the direction toward which fluid flows.

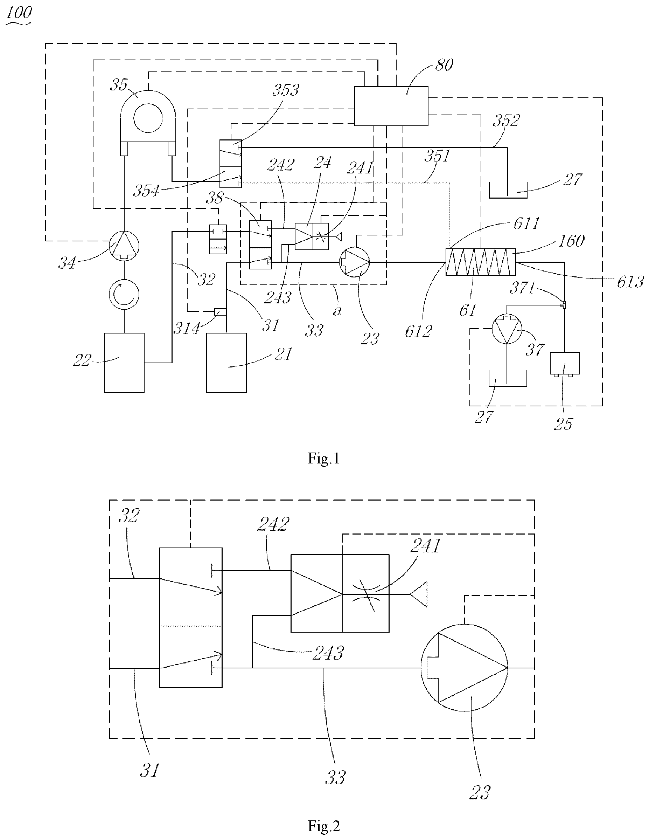

Referring to Fig. 1, an embodiment of the present application provides a milk beverage dispensing system 100, suitable for various beverage machines, such as coffee machines, tea extraction machines, and juice machines.

The milk beverage dispensing system 100 includes a mixing device 160, a steam generator 35, and a hydraulic pump 23. The mixing device 160 includes a mixing chamber 61, which has a steam inlet 611, a fluid inlet 612, and a discharge outlet 613. The steam generator 35 is connected to the steam inlet 611 for generating steam. The hydraulic pump 23 is connected between a milk supply source 21 and the fluid inlet 612 for pumping milk liquid from the milk supply source 21 into the mixing chamber 61 through the fluid inlet 612.

The milk beverage dispensing system 100 also includes a beverage outlet 25, a milk inlet pipeline 31, and a water inlet pipeline 32. The beverage outlet 25 is connected downstream of the discharge outlet 613 and is used to output milk beverages generated by the milk beverage dispensing system 100, such as cold milk foam, hot milk foam, cold milk, or hot milk. The milk inlet pipeline 31 is configured to connect to the milk supply source 21; the water inlet pipeline 32 is configured to connect to the water supply source 22. The delivery pipeline 33 is connected downstream of the milk inlet pipeline 31 and water inlet pipeline 32. Milk liquid from the milk supply source 21 can be delivered from the milk inlet pipeline 31 to the delivery pipeline 33, and water or cleaning liquid from the water supply source 22 can be delivered from the water inlet pipeline 32 to the delivery pipeline 33. The delivery pipeline 33 can selectively deliver milk liquid from the milk supply source 21 or water or cleaning liquid from the water supply source 22.

The milk liquid in the milk supply source 21 can be cow's milk, oat milk, or coconut milk, etc. The water in the water supply source 22 can be drinking water, or the cleaning liquid in the water supply source 22 can be cleaning liquid with cleaning agent added. Based on different liquids in the milk supply source 21 and water supply source 22, accordingly, the delivery pipeline 33 can deliver different liquids.

The hydraulic pump 23 is arranged on the delivery pipeline 33 and is configured to selectively deliver liquid from either the milk inlet pipeline 31 or the water inlet pipeline 32. The hydraulic pump 23 can suck in milk liquid through the milk inlet pipeline 31 from the milk supply source 21, or suck in water or cleaning liquid through the water inlet pipeline 32 from the water supply source 22. The hydraulic pump 23 can be a gear pump, plunger pump, vane pump, or screw pump, etc. In the present embodiment, a gear pump is preferred as it can reduce the volume of the entire system in the milk beverage dispensing system 100, thus making the beverage machine more compact. Additionally, constructing the hydraulic pump 23 as a gear pump also facilitates precise control of the pumping flow rate of the hydraulic pump 23.

Optionally, the milk beverage dispensing system 100 further includes an air valve 24, which is connected to the delivery pipeline 33 between the milk supply source 21 and the hydraulic pump 23, for selectively providing air to the delivery pipeline 33. When air is provided to the delivery pipeline 33 through the air valve 24, a mixture of milk liquid and air is delivered together into the mixing chamber 61, ultimately generating milk foam discharged from the discharge outlet 613; when the air valve 24 is restricted from providing air to the delivery pipeline 33, only milk liquid is delivered into the mixing chamber 61 and discharged from the discharge outlet 613.

When the air valve 24 provides air to the delivery pipeline 33 and the milk supply source 21 provides milk liquid to the delivery pipeline 33, air and milk liquid mix in the delivery pipeline 33, forming a gas-liquid mixture. The mixing device 160 is connected between the delivery pipeline 33 and the beverage outlet 25, and is configured to thoroughly mix the gas-liquid mixture from the delivery pipeline 33, or to mix and heat the mixture. The fluid inlet 612 of the mixing device 160 is connected to the delivery pipeline 33, and milk liquid or gas-liquid mixture of milk liquid and air from the delivery pipeline 33 is delivered to the beverage outlet 25 through the fluid inlet 612, mixing chamber 61, and discharge outlet 613.

An electromagnetic pump 34 is connected upstream of the steam generator 35; optionally, the electromagnetic pump 34 is connected between the water supply source 22 and the steam generator 35; the steam inlet 611 is connected to the outlet of the steam generator 35 through a steam pipeline 351, and the electromagnetic pump 34 can operably regulate the water flow rate entering the steam generator 35. The mixing device 160 is configured to heat milk liquid or gas-liquid mixture through steam input, making it convenient to select hot milk liquid, hot milk foam, or cold milk foam, cold milk liquid output by whether steam is introduced into the mixing device 160. Optionally, when steam is introduced into the mixing device 160, the beverage outlet 25 outputs hot milk liquid or hot milk foam; when steam is not introduced into the mixing device 160, the beverage outlet 25 outputs cold milk liquid or cold milk foam.

The steam generator 35 can be configured as an electric heating plate, which can quickly heat water to generate steam and reduce the cost of the entire system. The steam generator 35 can also be configured as a steam boiler, which has high steam temperature and stable steam output speed, providing more stable steam output.

Referring to Fig. 2, the air valve 24 can open or close the air inlet hole 241, thereby allowing or restricting air from entering the delivery pipeline 33, enabling selection of milk foam output or milk liquid output through opening or closing the air inlet hole 241. For example, when the air valve 24 opens the air inlet hole 241, milk foam, such as hot milk foam or cold milk foam, can be output at the beverage outlet 25; when the air valve 24 closes the air inlet hole 241, milk liquid, such as hot milk liquid or cold milk liquid, can be output at the beverage outlet 25.

Additionally, the air valve 24 can be set to have a constant air intake, meaning the opening size of the air inlet hole 241 is not adjustable; the air valve 24 can also be set to have an adjustable air intake, meaning the opening size of the air inlet hole 241 is adjustable. For example, by controlling the area of the air inlet hole 241 to adjust the air supply amount, thereby achieving milk foam output with different foaming degrees and/or different temperatures to meet different user requirements.

The air valve 24 includes an inlet conduit 242 and an outlet conduit 243, the outlet conduit 243 is connected to the air inlet hole 241, the inlet conduit 242 is connected to the outlet conduit 243, the downstream end of the outlet conduit 243 is connected to the delivery pipeline 33, and the upstream end of the inlet conduit 242 is connected to the water inlet pipeline 32. Air can sequentially flow through the air inlet hole 241 and the outlet conduit 243 to enter the delivery pipeline 33, and water or cleaning liquid in the water inlet pipeline 32 can sequentially flow through the inlet conduit 242 and the outlet conduit 243 to enter the delivery pipeline 33.

When making milk foam, the outlet conduit 243 provides air to the delivery pipeline 33, and the milk inlet pipeline 31 provides milk liquid to the delivery pipeline 33. When the outlet conduit 243 is in communication with the delivery pipeline 33, milk liquid may enter the outlet conduit 243. With the above construction of the air valve 24, the outlet conduit 243 can deliver both air and water or cleaning liquid to the delivery pipeline 33, meaning the air intake and cleaning share the same outlet conduit 243, allowing thorough cleaning of the outlet conduit 243 without blind spots. Having the outlet conduit 243 shared for air intake and cleaning can prevent situations where the air valve 24 becomes contaminated with milk liquid and cannot be cleaned. When cleaning the delivery pipeline 33 and mixing device 160, water or cleaning liquid can flow through the inlet conduit 242 and outlet conduit 243, cleaning them simultaneously. The entire process can be automatically controlled without requiring manual operation by users, improving user experience. Comprehensive cleaning of the pipelines also ensures the quality and safety of the output milk beverages.

Optionally, when the steam generator 35 is configured as an electric heating plate, the milk beverage dispensing system also includes an electromagnetic pump 34 connected between the water supply source 22 and the electric heating plate; the electric heating plate is connected to the steam inlet 611 through a steam pipeline 351. The milk beverage dispensing system 100 also includes a controller 80, and a pressure relief pipeline 352 is connected to the outlet of the electric heating plate, with a pressure relief valve 353 provided on the pressure relief pipeline 352, and the downstream end of the pressure relief pipeline 352 is connected to a water collection box 27; both the pressure relief valve 353 and the electric heating plate are electrically connected to the controller 80. The controller 80 is configured to control the pressure relief valve 353 and the electric heating plate to activate simultaneously, allowing the electric heating plate to heat up while releasing pressure, or the controller 80 is configured to control the electric heating plate to activate after the pressure relief valve 353, allowing the electric heating plate to heat up after pressure relief.

In some embodiments, both the hydraulic pump 23 and electromagnetic pump 34 are electrically connected to the controller 80. When preparing hot milk liquid, the controller 80 is configured to control the hydraulic pump 23 to activate later than the electromagnetic pump 34, ensuring steam generated by the electric heating plate reaches the mixing device 160 before the milk liquid. When preparing hot milk foam, the controller 80 is configured to control the hydraulic pump 23 to activate later than the electromagnetic pump 34, ensuring steam generated by the electric heating plate reaches the mixing device 160 before the gas-liquid mixture. Allowing steam to enter the mixing device 160 before milk liquid or gas-liquid mixture preheats the mixing device 160, raising the temperature of the mixing chamber 61, which can effectively increase the temperature of the initial output milk beverage, thereby avoiding the problem of low cup temperature when outputting hot milk liquid or hot milk foam.

Optionally, the above milk beverage dispensing system 100 also includes a drain pump 37 provided between the discharge outlet 613 and beverage outlet 25. The drain pump 37, hydraulic pump 23, and air valve 24 are all electrically connected to the controller 80. The downstream end of the drain pump 37 is connected to the water collection box 27. The controller 80 is configured to activate the drain pump 37 within one preset time after activating the hydraulic pump 23, or within another preset time after opening the air valve 24, where the drain pump 37 intercepts and diverts flow upstream of the beverage outlet 25 to the water collection box 27.

By installing the drain pump 37, when making hot or cold milk foam, the initial poor-quality milk foam output from the mixing device 160 can be drained to the water collection box 27 by activating the drain pump 37, then switching to the beverage outlet 25 after deactivating the drain pump 37, ensuring foam quality and outputting a higher quality milk beverage. When making hot milk liquid or hot milk foam, the initial low-temperature milk liquid or foam output from the mixing device 160 can be drained to the water collection box 27 by activating the drain pump 37, then switching to the beverage outlet 25 after deactivating the drain pump 37, ensuring the temperature of hot milk liquid or hot milk foam and outputting a milk beverage that meets temperature requirements.

When the water inlet pipeline 32 is connected to the delivery pipeline 33, the controller 80 is also configured to activate the drain pump 37. The system automatically performs a cleaning cycle after making each cup of milk beverage. The drain pump 37 continues activating during the final stage of milk beverage preparation, with the final milk liquid and cleaning wastewater being drained to the water collection box 27 under the suction of the drain pump 37. Additionally, the installation of the drain pump 37 not only drains unwanted fluid but also helps remove liquid droplets from the pipe walls to the water collection box 27, making pipeline cleaning more thorough and clean, avoiding the influence of remaining droplets on the taste of the next milk beverage. The installation of the drain pump 37 can effectively empty residual liquid in the system pipelines, prevent contamination, facilitate cleaning, and thereby improve system hygiene.

The above milk beverage dispensing system 100 can generate milk foam or milk liquid based on whether the air valve 24 provides air to the delivery pipeline 33; it can also generate hot milk liquid and hot milk foam, or cold milk liquid and cold milk foam based on whether the electric heating plate provides steam to the mixing device 160. When the milk beverage dispensing system 100 provides hot milk liquid and hot milk foam, the temperature of the generated beverage significantly affects the taste of the beverage, and for some beverages with high temperature requirements, low beverage temperature will not meet user needs.

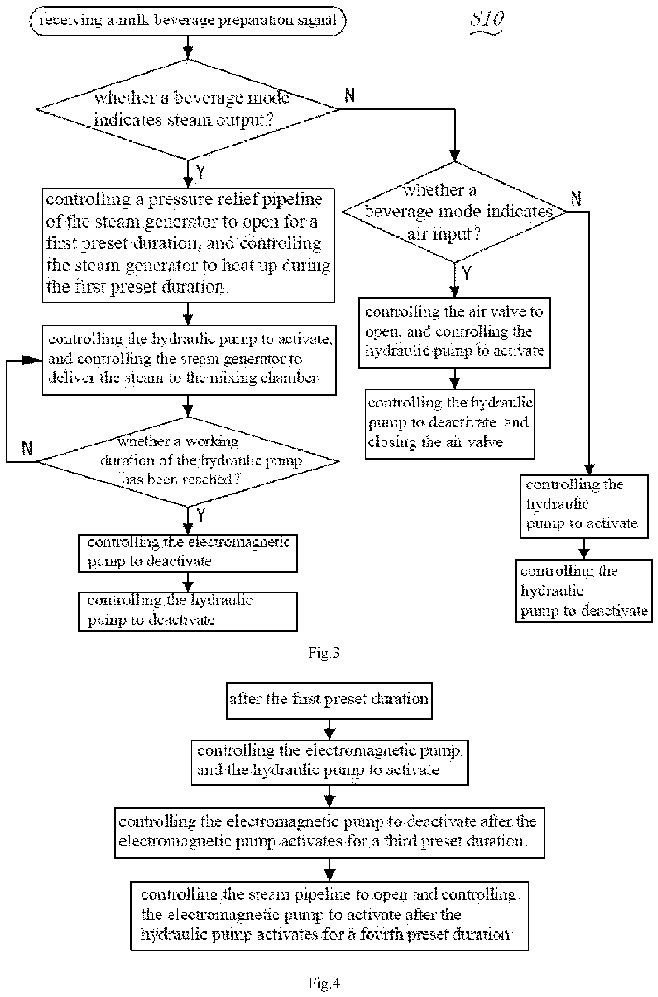

Referring to Fig. 3, in some embodiments, a control method S10 for the milk beverage dispensing system is provided, applied to the above milk beverage dispensing system. The control method S10 includes the following steps:
receiving a milk beverage preparation signal; when determining that a beverage mode corresponding to the milk beverage preparation signal is a beverage mode indicating steam output, controlling a pressure relief pipeline 352 of the steam generator 35 to open for a first preset duration, and controlling the steam generator 35 to heat up during the first preset duration;
after the first preset duration, controlling the hydraulic pump 23 to activate for delivering milk liquid from the milk supply source 21 to the mixing chamber 61, and controlling the steam generator 35 to deliver the steam to the mixing chamber 61, wherein the steam enters the mixing chamber 61 not later than the milk liquid.

The milk beverage preparation signal can be a signal for preparing cold milk liquid, cold milk foam, hot milk liquid, or hot milk foam, and can indicate the beverage mode. The milk beverage preparation signal can be generated through user input on an operation panel of the beverage machine, or can be automatically generated from remote operation by users on mobile devices transmitted to the beverage machine.

The beverage mode can include beverage modes indicating steam output and limiting steam output. The beverage mode indicating steam output can include hot milk liquid mode and hot milk foam mode; the beverage mode limiting steam output can include cold milk liquid mode and cold milk foam mode. The beverage mode indicating steam output uses steam to heat milk liquid or a mixture of milk liquid and air, thereby outputting beverages that meet temperature requirements.

When starting to make hot milk liquid or hot milk foam, the pressure relief valve 353 needs to be opened to release pressure to the water collection box 27 through the pressure relief pipeline 352, emptying the electric heating plate.

The initial steam generation speed of the steam generator 35 is slow, affecting high-temperature steam output and consequently affecting the initial temperature of the milk beverage. By controlling the steam generator 35 to heat up while releasing pressure, or slightly delaying the heating of the steam generator 35 after pressure relief, the initial steam temperature of the steam generator 35 can be increased, ensuring high-temperature steam flow output, thereby ensuring the heating effect on milk liquid or mixture of milk liquid and air in the mixing device 160, and consequently ensuring the temperature of milk beverages output from the mixing device 160.

Controlling the pressure relief pipeline 352 of the steam generator 35 to open specifically means controlling the pressure relief valve 353 to open, connecting the steam generator 35 to the water collection box 27 through the pressure relief pipeline 352, achieving pressure relief of the steam generator 35. The steam generator 35 is connected to the steam inlet 611 of the mixing device 160 through the steam pipeline 351, a steam valve 354 is provided on the steam pipeline 351. Controlling the steam generator 35 to deliver steam to the mixing chamber 61 of the mixing device 160 specifically means opening the steam valve 354, allowing steam to enter the mixing chamber 61 through the steam pipeline 351. The pressure relief valve 353 and steam valve 354 can be two independent valves or a multi-way valve, such as a three-way valve.

The initial heating speed of the heating curve of the electric heating plate is slow. To avoid the slow initial heating speed affecting high-temperature steam output and consequently affecting the initial temperature of milk beverages, the pressure relief valve 353 and electric heating plate can be started simultaneously. During the pressure relief process through the pressure relief pipeline 352 to empty the electric heating plate, the electric heating plate simultaneously undergoes the slow initial heating phase. When milk beverage preparation begins after the electric heating plate is emptied, the electric heating plate has a higher temperature, ensuring high-temperature steam flow output, thereby ensuring the heating effect on milk liquid or gas-liquid mixture, and consequently ensuring the temperature of milk beverages output from the beverage outlet 25.

In one embodiment, the first preset duration is the pressure relief duration of the electric heating plate. In this embodiment, the first preset duration can be 2-4 seconds, meaning the electric heating plate undergoes 2-4 seconds of pressure relief. For example, the first preset duration is 3 seconds, meaning the electric heating plate undergoes 3 seconds of pressure relief, and the electric heating plate starts heating 1 second after pressure relief begins, meaning there is a 1-second delay between the start time of heating and the start time of pressure relief.

Controlling the electric heating plate to heat up during the first preset duration of pressure relief allows the slow initial phase of heating curve of the electric heating plate to pass, so when water is supplied to the electric heating plate through the electromagnetic pump 34 later, the incoming water can vaporize more quickly to produce high-temperature steam.

After the electric heating plate completes pressure relief, the hydraulic pump 23 is controlled to activate and the steam valve 354 is opened. The steam generator 35 has already started heating during the first preset duration, and after the steam valve 354 opens, steam flow is faster, ensuring steam enters the mixing chamber 61 not later than milk liquid, thereby effectively increasing the temperature of initially output beverages.

In the above-described control method S10, controlling the steam generator 35 to heat up during the first preset duration includes: controlling the electric heating plate to heat up during the first preset duration.

During the first preset duration, the the above-described control method S10 further comprises: controlling the electromagnetic pump 34 to deactivate, and controlling the steam pipeline 351 to close.

During the first preset duration of pressure relief, the electromagnetic pump 34 is deactivated and the steam pipeline 351 is closed, restricting residual steam from entering the mixing chamber 61.

After the first preset duration, the control method also includes: controlling the pressure relief pipeline 352 to close. Closing the pressure relief pipeline 352 after the electric heating plate pressure relief ensures all steam enters the mixing chamber 61 through the steam pipeline 351 to heat the milk liquid or gas-liquid mixture of milk liquid and air, avoiding steam waste through the pressure relief pipeline 352.

In some embodiments, after the first preset duration, that is, after the completion of pressure relief of the electric heating plate, the above-described control method S10 further includes:
controlling the electromagnetic pump 34 to activate and controlling the steam pipeline 351 to open simultaneously, to deliver the steam to the mixing chamber 61;
controlling the hydraulic pump 23 to activate for delivering the milk liquid to the mixing chamber 61, wherein the activation of the hydraulic pump 23 is delayed by a second preset duration relative to the activation of the electromagnetic pump 34, so that the steam enters the mixing chamber 61 earlier than the milk liquid.

Controlling the electromagnetic pump 34 to activate before controlling the hydraulic pump 23 to activate ensures steam enters the mixing chamber 61 earlier than milk liquid. The steam entering the mixing device 160 first can preheat the mixing device 160, raising the temperature of the mixing chamber 61, allowing subsequently entering milk liquid to be heated more quickly. Especially when making consecutive beverages, the sequential activation of the electromagnetic pump 34 and hydraulic pump 23, with the time interval ensuring steam enters the mixing chamber 61 before milk liquid, can ensure the temperature of hot beverages meets user requirements.

In the present embodiment, the second preset duration can be 1-3 seconds, which can be shorter than the first preset duration, ensuring steam enters the mixing chamber 61 before milk liquid without affecting the total beverage preparation time.

Referring to Fig. 4, in other embodiments, after the first preset duration, that is, after the completion of pressure relief of the electric heating plate, the above-described control method S10 further includes:
controlling the electromagnetic pump 34 and the hydraulic pump 23 to activate;
controlling the electromagnetic pump 34 to deactivate after the electromagnetic pump 34 activates for a third preset duration,
controlling the steam pipeline 351 to open and controlling the electromagnetic pump 34 to activate after the hydraulic pump 23 activates for a fourth preset duration, wherein the fourth preset duration is longer than the third preset duration.

For the first cup output after a long period without beverage preparation, or the first cup output after machine shutdown, or the first cup output after pipeline cleaning and emptying, the hydraulic pump 23 might have relatively low suction power. If steam enters the mixing chamber 61 first, the increased pressure in the mixing chamber 61 might prevent the hydraulic pump 23 from properly pumping milk liquid. Through the above control of the electromagnetic pump 34 and hydraulic pump 23 as shown in Fig. 4, when steam enters the mixing chamber 61, milk liquid has at least passed through the hydraulic pump 23 under the pumping action, filling the hydraulic pump 23. At this time, the suction power of the hydraulic pump 23 increases, avoiding situations where milk liquid cannot be properly pumped due to low suction power.

The electromagnetic pump 34 can pump a small amount of water to the electric heating plate during the third preset duration, then the electromagnetic pump 34 is controlled to deactivate. At this time, the steam pipeline 351 is also closed. During the time difference between the fourth and third preset durations, the small amount of water pumped into the electric heating plate is heated to generate steam, which accumulates in the electric heating plate.

After the hydraulic pump 23 operates for the fourth preset duration, the steam pipeline 351 is controlled to open. This means during the time interval between the electromagnetic pump 34 activating and the steam pipeline 351 opening, the steam generated from water pumped during the third preset duration accumulates in the electric heating plate until the output of the hydraulic pump 23 enters a stable phase. The accumulated steam can enter the mixing chamber 61 faster than or simultaneously with milk liquid. At this time, the electromagnetic pump 34 also activates to provide continuous steam output, and milk liquid does not enter the mixing chamber 61 earlier than steam, ensuring the temperature of hot beverages meets user requirements.

For example, the third preset duration can be 0.3-0.7 seconds, and the fourth preset duration can be 0.9-1.5 seconds. During the time that the fourth preset duration exceeds the third preset duration, i.e., during the time difference between the fourth and third preset durations, the water pumped into the electric heating plate by the electromagnetic pump 34 is vaporized to generate steam. The deactivating of the electromagnetic pump 34 and closing of steam pipeline 351 allows steam to accumulate in the electric heating plate. When the steam pipeline 351 opens, under the pressure of accumulated steam, steam enters the mixing chamber 61 more quickly. Even if the opening of the steam pipeline 351 is delayed relative to the activation of the hydraulic pump 23, it can still ensure steam does not enter the mixing chamber 61 later than milk liquid, thereby guaranteeing beverage temperature without increasing total beverage preparation time.

In the above embodiment, when determining that the beverage mode corresponding to the milk beverage preparation signal is a beverage mode indicating steam output, it further determines whether the beverage mode corresponding to the milk beverage preparation signal is a beverage mode indicating air input. If so, it indicates hot milk foam needs to be output. Under the above control method, it further includes controlling the air valve 24 to open. When the hydraulic pump 23 activates, it will drive both milk liquid and air through the delivery pipeline 33 into the mixing chamber 61.

In the beverage mode indicating steam output, steam might continue to overflow from the beverage outlet 25 after beverage preparation is complete, which can be troublesome for users and result in poor user experience. To avoid this situation, in some embodiments, the milk beverage preparation signal includes milk beverage parameter information, and the control method S10 further includes:
determining a working duration of the hydraulic pump 23 based on the milk beverage parameter information;
controlling the hydraulic pump 23 and the electromagnetic pump 34 to deactivate based on the working duration of the hydraulic pump 23, wherein the deactivation of the electromagnetic pump 34 precedes the deactivation of the hydraulic pump 23 by a fifth preset duration.

The milk beverage parameter information can include output cup volume, output flow rate of the hydraulic pump 23, etc. Based on these parameters, the required working duration of the hydraulic pump 23 for outputting one cup of beverage is determined. For example, for a larger cup volume, the working duration of the hydraulic pump 23 would be correspondingly longer. Controlling the deactivation of the hydraulic pump 23 and electromagnetic pump 34 based on this working duration is not limited by the duration or timing sequence of their operation, only requiring the electromagnetic pump 34 to deactivate before the hydraulic pump 23. The fifth preset duration can be 1-4 seconds. When the electromagnetic pump 34 deactivates, steam will still enter the mixing chamber 61, and this residual steam can heat the final portion of milk liquid or mixture of milk liquid and air. The residual steam can be fully utilized while avoiding steam overflow from the beverage outlet 25 after beverage completion, improving user experience and energy efficiency.

Furthermore, when the beverage mode corresponding to the milk beverage preparation signal is a beverage mode limiting steam output, only controlling the hydraulic pump 23 to activate is needed. When further determining whether the beverage mode corresponding to the milk beverage preparation signal is a beverage mode indicating air input, if so, it indicates cold milk foam needs to be output. Controlling the air valve 24 to open, when the hydraulic pump 23 activates, it will drive both milk liquid and air through the delivery pipeline 33 into the mixing chamber 61, and deactivate the hydraulic pump 23 after reaching the working duration of the hydraulic pump 23, or deactivate both the hydraulic pump 23 and air valve 24.

After outputting milk beverage, if there is no next beverage output within a preset time, or after making a preset number of beverages, pipeline cleaning is required.

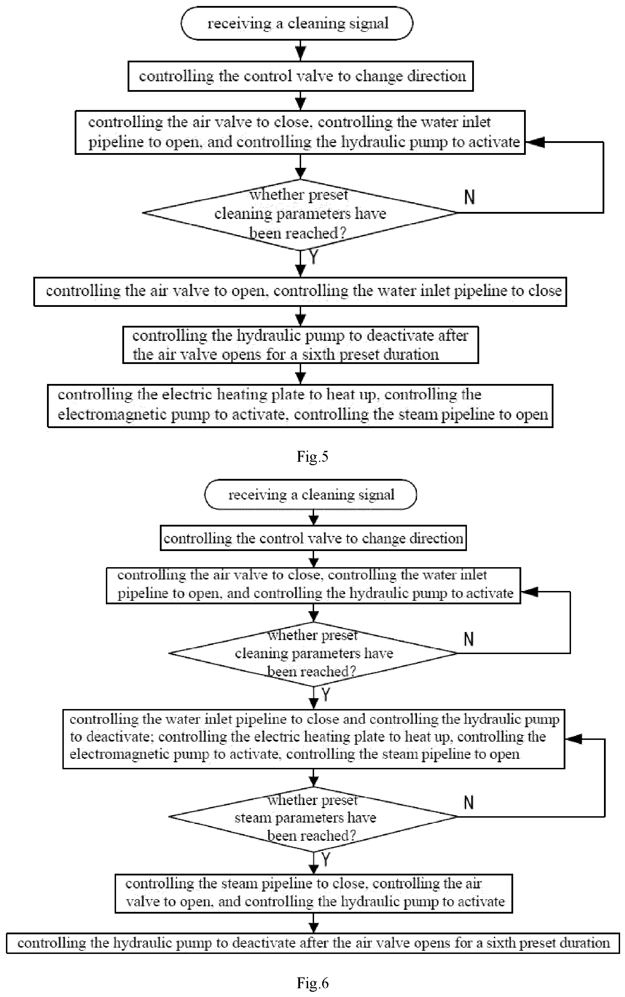

In some embodiments, the milk beverage dispensing system also includes a control valve 38, which can be a multi-way solenoid valve or multi-way pinch valve. The delivery pipeline 33 is connected to the control valve 38, a water inlet pipeline 32 is connected between the water supply source 22 and the control valve 38, and the air valve 24 includes an outlet conduit 243 connected between the control valve 38 and the hydraulic pump 23. Referring to Fig. 5, the control method for pipeline cleaning includes:
receiving a cleaning signal;
controlling the control valve 38 to change direction to connect the water inlet pipeline 32 to the hydraulic pump 23;
controlling the air valve 24 to close, controlling the water inlet pipeline 32 to open, and controlling the hydraulic pump 23 to activate, wherein under action of the hydraulic pump 23, water in the water inlet pipeline 32 flows through the outlet conduit 243 and then enters the mixing chamber 61, and then is discharged through the discharge outlet 613;
after reaching preset cleaning parameters, controlling the air valve 24 to open, controlling the water inlet pipeline 32 to close, wherein under action of the hydraulic pump 23, air flows through the outlet conduit 243 and then enters the mixing chamber 61, and then is discharged through the discharge outlet 613;
controlling the hydraulic pump 23 to deactivate after the air valve 24 opens for a sixth preset duration;
controlling the electric heating plate to heat up, controlling the electromagnetic pump 34 to activate, controlling the steam pipeline 351 to open, so that steam in the steam pipeline 351 enters the mixing chamber 61 and is discharged through the discharge outlet 613.

The preset cleaning parameters can be the flow rate of water or cleaning liquid delivered by the hydraulic pump 23, or the time duration of the hydraulic pump 23 pumping water or cleaning liquid. The sixth preset duration can be the time required for emptying pipelines with external air, which can be a constant duration set by the system or can be adjusted according to different scenarios.

The above cleaning signal can be automatically triggered based on system settings, such as automatically triggering after milk beverage output if there is no next beverage output within a preset time, or automatically triggering after making a preset number of beverages, or can be manually triggered by users. According to the above cleaning process, first clean the delivery pipeline 33 and mixing device 160 with water through the water inlet pipeline 32, then open the air valve 24 to empty liquid in the pipelines with external air, finally introduce steam into the mixing chamber 61 to further empty liquid in the pipelines and perform high-temperature sterilization. During water cleaning and air emptying of pipelines, since the outlet conduit 243 for air delivery is connected between the control valve 38 and hydraulic pump 23, cleaning of the outlet conduit 243 can be achieved simultaneously. The entire process can be automatically controlled without requiring manual operation by users, improving user experience. Comprehensive pipeline cleaning also ensures the quality and safety of output milk beverages.

Referring to Fig. 6, in other embodiments, the control method for pipeline cleaning includes:
receiving a cleaning signal; controlling the control valve 38 to change direction to connect the water inlet pipeline 32 to the hydraulic pump 23;
controlling the air valve 24 to close, controlling the water inlet pipeline 32 to open, and controlling the hydraulic pump 23 to activate, wherein under action of the hydraulic pump 23, water in the water inlet pipeline 32 flows through the outlet conduit 243 and then enters the mixing chamber 61, and then is discharged through the discharge outlet 613;
after reaching preset cleaning parameters, controlling the water inlet pipeline 32 to close and controlling the hydraulic pump 23 to deactivate; controlling the electric heating plate to heat up, controlling the electromagnetic pump 34 to activate, controlling the steam pipeline 351 to open, so that steam in the steam pipeline 351 enters the mixing chamber 61 and is discharged through the discharge outlet 613;
after reaching preset steam parameters, controlling the steam pipeline 351 to close, controlling the air valve 24 to open, and controlling the hydraulic pump 23 to activate, wherein under action of the hydraulic pump 23, air flows through the outlet conduit 243 and then enters the mixing chamber 61, and then is discharged through the discharge outlet 613;
controlling the hydraulic pump 23 to deactivate after the air valve 24 opens for a sixth preset duration.

According to the above cleaning process, first clean the delivery pipeline 33 and mixing device 160 with water through the water inlet pipeline 32, then introduce steam into the mixing chamber 61 to empty liquid in the pipelines and perform high-temperature sterilization, finally open the air valve 24 to further empty residual liquid droplets in the pipelines with external air. During water cleaning, cleaning of the outlet conduit 243 can be achieved simultaneously. Finally emptying pipelines with air can empty liquid droplets in the mixing chamber 61. The entire process can be automatically controlled without requiring manual operation by users, improving user experience. Comprehensive pipeline cleaning also ensures the quality and safety of output milk beverages.

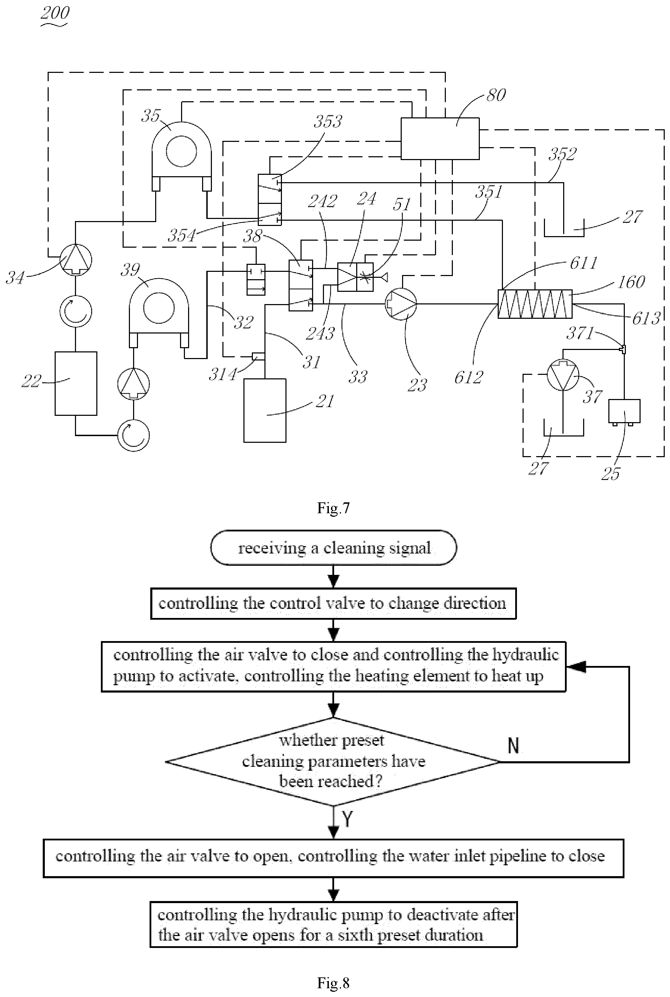

Referring to Fig. 7, in another embodiment, a milk beverage dispensing system 200 further includes a control valve 38, the delivery pipeline 33 is connected to the control valve 38, a water inlet pipeline 32 is connected between the water supply source 22 and the control valve 38, and a heating element 39 is connected to the water inlet pipeline 32. The air valve 24 includes an outlet conduit 243 connected between the control valve 38 and the hydraulic pump 23. Providing the heating element 39 can provide hot water cleaning or steam sterilization for the entire system, reducing the load on the electric heating plate. It can also provide hot water output at the beverage outlet 25, offering users more functional options.

Referring to Fig. 8, the control method for pipeline cleaning includes:
receiving a cleaning signal;
controlling the control valve 38 to change direction to connect the water inlet pipeline 32 to the hydraulic pump 23;
controlling the air valve 24 to close, controlling the hydraulic pump 23 to activate, and controlling the heating element 39 to heat up, wherein under action of the hydraulic pump 23, hot water in the water inlet pipeline 32 flows through the outlet conduit 243 and then enters the mixing chamber 61, and then is discharged through the discharge outlet 613;
after reaching preset cleaning parameters, controlling the air valve 24 to open, and controlling the water inlet pipeline 32 to close; wherein under action of the hydraulic pump 23, air flows through the outlet conduit 243 and then enters the mixing chamber 61, and then is discharged through the discharge outlet 613;
controlling the hydraulic pump 23 to deactivate after the air valve 24 opens for a sixth preset duration.

According to the above cleaning process, first using the water inlet pipeline 32 to perform hot water cleaning of the delivery pipeline 33 and mixing device 160, then opening the air valve 24 to empty residual liquid droplets in the pipelines with external air. Hot water cleaning can improve cleanliness and provide initial high-temperature sterilization. This can eliminate the need for introducing steam into the mixing chamber 61; or optionally, steam can be introduced into the mixing chamber 61 for further high-temperature sterilization. During hot water cleaning and air emptying of pipelines, hot water cleaning of the outlet conduit 243 can also be achieved. The entire process can be automatically controlled without requiring manual operation by users, improving user experience. Comprehensive pipeline cleaning ensures the quality and safety of output milk beverages.

Optionally, the above control method S10 further includes the following step:
after reaching the working duration of the hydraulic pump 23, controlling the drain pump 37 to activate.

Optionally, the drain pump 37 can be controlled to activate either before or after receiving the cleaning signal, as long as the final portion of milk liquid or milk foam is drained to the water collection box before specific pipeline cleaning. This can prevent dripping from the beverage outlet 25 or affecting the next beverage, and ensure the effectiveness of the pipeline cleaning process.

In some embodiments, the above control method S10 further includes the following step:
when the beverage mode corresponding to the milk beverage preparation signal is a beverage mode indicating steam output, or the beverage mode corresponding to the milk beverage preparation signal is a beverage mode indicating air input, controlling the drain pump 37 to activate within an eighth preset duration after the hydraulic pump 23 activates, to intercept the flow of beverage output from the discharge outlet 613 to the beverage outlet 25.

When hot milk foam or hot milk liquid passes upstream of the drain pump 37, the initial lower-temperature portion will be drained to the water collection box 27 by the drain pump 37, then switching to the beverage outlet 25 to output a cup of higher-temperature hot milk foam or hot milk liquid. When cold milk foam or hot milk foam passes upstream of the drain pump 37, the initial poor-quality foam portion will be drained to the water collection box 27 by the drain pump 37, then switching to the beverage outlet 25 to output a cup of high-quality cold milk foam or hot milk foam. The milk beverage dispensing system can output hot milk foam with high foam quality and temperature meeting user requirements, hot milk liquid with temperature meeting user requirements, and cold milk foam with high foam quality.

The eighth preset duration can be 2-5 seconds, with initial milk foam or milk liquid output from the discharge outlet 613 being drained to the water collection box 27, followed by stable milk foam or high-temperature milk liquid being discharged into the cup.

In some other embodiments, the cleaning process starts after making a preset number of milk beverages, with the drain pump 37 draining wastewater to the water collection box 27.

Optionally, a three-way pipe 371 is connected between the discharge outlet 613 and beverage outlet 25, with the input end of the drain pump 37 connected to the three-way pipe 371 and the output end connected to the water collection box 27. Providing the three-way pipe 371 can make system pipeline arrangement more flexible while reducing system cost.

In some embodiments, the milk beverage dispensing system also includes a temperature sensor 314 provided on the milk inlet pipeline 31, the temperature sensor 314 is electrically connected to the controller 80. The controller 80 is configured to control the liquid output flow rate of the hydraulic pump 23 based on the temperature detected by the temperature sensor 314. The milk supply source 21 may contain room-temperature or refrigerated milk liquid. The temperature sensor 314 can real-time detect milk liquid temperature in the milk inlet pipeline 31, adjusting different duty cycles of the hydraulic pump 23 based on different detected milk liquid temperatures. If the milk supply source 21 contains refrigerated milk liquid and the temperature sensor 314 detects low inlet temperature, the duty cycle of the hydraulic pump 23 is reduced to control and slow down the liquid output flow rate, meaning slowing down the milk pumping speed, thereby slowing down the speed of milk liquid pumped into the mixing device 160. This can increase the temperature of output hot milk liquid or hot milk foam by increasing the steam proportion, or by slowing down the flow rate of milk liquid through the milk inlet pipeline 31, reducing the amount of fluid heated per unit time to increase the temperature of output hot milk liquid or hot milk foam. The temperature sensor 314 can be an NTC (Negative Temperature Coefficient thermistor), which has high sensitivity and stable temperature detection, enabling reliable temperature output of milk beverages based on NTC detection.

Using an electric heating plate to provide steam for heating the mixing device 160 results in low beverage temperature at the beginning, only achieving higher temperature near the end, resulting in unstable and low cup temperature. In order to raise the temperature of the beverage, in the beverage mode indicating steam output, obtaining the temperature of the milk liquid output from the milk supply source 21, the above control method S10 further includes at least one of the following steps:
a) when the temperature of the milk liquid is lower than a first preset value, reducing PWM (Pulse Width Modulation) duty cycle of the hydraulic pump 23 to decrease milk liquid flow rate; when the temperature of the milk liquid is higher than a second preset value, increasing PWM duty cycle of the hydraulic pump 23 to increase milk liquid flow rate, wherein the first preset value is less than the second preset value;
b) when the temperature of the milk liquid is lower than a first preset value, increasing a pulse ratio of on-duration to off-duration of the electromagnetic pump 34 operation to increase water speed pumped into the electric heating plate; when the temperature of the milk liquid is higher than a second preset value, decreasing the pulse ratio of on-duration to off-duration of the electromagnetic pump 34 operation to decrease water speed pumped into the electric heating plate, wherein the first preset value is less than the second preset value;
c) when the temperature of the milk liquid is lower than a first preset value, calculating a ratio of the temperature of the milk liquid to a standard temperature, controlling the air valve 24 to increase an area of an air inlet hole 241 based on the ratio; when the temperature of the milk liquid is higher than a second preset value, calculating the ratio of the temperature of the milk liquid to the standard temperature, controlling the air valve 24 to decrease the area of the air inlet hole 241 based on the ratio, wherein the first preset value is less than the second preset value.

The milk liquid from the milk supply source 21 can be either cold milk liquid or room-temperature milk liquid, and room-temperature milk liquid temperatures can vary based on the external environment. The first preset value can represent cold milk liquid temperature, for example 5 ° C. When cold milk liquid is detected, the PWM duty cycle of the hydraulic pump 23 is reduced, decreasing the amount of milk liquid entering the mixing chamber 61 while maintaining more steam, thus not affecting the output hot milk liquid temperature. The second preset value can represent higher-temperature room-temperature milk liquid, for example 15 ° C. When high-temperature room-temperature milk liquid is detected, the PWM duty cycle of the hydraulic pump 23 is increased, increasing the amount of milk liquid entering the mixing chamber 61, ensuring the output hot milk liquid temperature doesn't rise due to environmental effects.

Additionally, by controlling the electromagnetic pump 34 to increase or decrease water speed pumped into the electric heating plate, steam volume can be correspondingly increased or decreased to adjust output milk beverage temperature. The air valve 24 can also be controlled to increase or decrease the area of the air inlet hole. Since both milk liquid and air are sucked by the hydraulic pump 23, when air output increases or decreases, milk liquid correspondingly decreases or increases, resulting in stable temperature of steam-heated milk beverage output.

When a previous beverage output is cold milk liquid or cold milk foam, while a next beverage output requires hot milk liquid or hot milk foam, in order to increase the temperature of the dispensed beverage, when determining that a beverage mode corresponding to a current milk beverage preparation signal is a beverage mode indicating steam output, and a beverage mode corresponding to a previous milk beverage preparation signal is a beverage mode limiting steam output, the above control method S10 further comprises at least one of the following steps:
reducing PWM duty cycle of the hydraulic pump 23 to decrease milk liquid flow rate;
increasing a pulse ratio of on-duration to off-duration of the electromagnetic pump 34 operation to increase water speed pumped into the electric heating plate;
controlling the air valve 24 to increase an area of an air inlet hole 241.

Through these methods, when switching from cold beverage output to hot beverage output, or outputting hot beverages after cleaning, it can compensate for low cup temperature caused by low pipeline temperature, ensuring output hot beverage temperature meets user requirements.

For example, the above milk beverage output systems 100 and 200 have the following output modes.

When making hot milk liquid, control the multi-way solenoid valve to switch, connecting the milk inlet pipeline 31 and delivery pipeline 33. The hydraulic pump 23 starts sucking milk liquid from the milk supply source 21. The air valve 24 is closed. Milk liquid sequentially passes through the milk inlet pipeline 31 and delivery pipeline 33 into the mixing device 160. Steam enters the mixing device 160 through the steam pipeline 351. Milk liquid and steam mix and exchange heat in the mixing device 160 to form hot milk liquid, then discharge through the beverage outlet 25.

When making hot milk foam, control the multi-way solenoid valve to switch, connecting the milk inlet pipeline 31 and delivery pipeline 33. The hydraulic pump 23 starts sucking milk liquid from the milk supply source 21. The air valve 24 opens to suck air. Milk liquid is sucked through the milk inlet pipeline 31 into the delivery pipeline 33, air is sucked through the outlet conduit 243 into the delivery pipeline 33. Milk liquid and air first mix in the delivery pipeline 33, then enter the mixing device 160 through the delivery pipeline 33. Steam enters the mixing device 160 through the steam pipeline 351. Milk liquid, steam, and air mix a second time in the mixing device 160 to form hot milk foam, then discharge through the beverage outlet 25.

When making cold milk liquid, control the multi-way solenoid valve to switch, connecting the milk inlet pipeline 31 and delivery pipeline 33. The hydraulic pump 23 starts sucking milk liquid from the milk supply source 21. The air valve 24 is closed. Milk liquid sequentially passes through the milk inlet pipeline 31 and delivery pipeline 33 into the mixing device 160, then discharges through the beverage outlet 25.

When making cold milk foam, control the multi-way solenoid valve to switch, connecting the milk inlet pipeline 31 and delivery pipeline 33. The hydraulic pump 23 starts sucking milk liquid from the milk supply source 21. The air valve 24 opens to suck air. Milk liquid is sucked through the milk inlet pipeline 31 into the delivery pipeline 33, air is sucked through the outlet conduit 243 into the delivery pipeline 33. Milk liquid and air first mix in the delivery pipeline 33 to form a gas-liquid mixture, enter the mixing device 160 through the delivery pipeline 33. Milk liquid and air mix a second time in the mixing device 160 to form cold milk foam, then discharge through the beverage outlet 25.

When cleaning pipelines, control the multi-way solenoid valve to switch, connecting the water inlet pipeline 32 and inlet conduit 242. Close the air inlet hole 241 of the air valve 24. Activate the hydraulic pump 23. Water or cleaning liquid from the water supply source 22 sequentially flows through the inlet conduit 242, outlet conduit 243, delivery pipeline 33, and mixing device 160, achieving water or cleaning liquid rinsing of the inlet conduit 242, outlet conduit 243, delivery pipeline 33, and mixing device 160. Then open the air inlet hole 241 of the air valve 24, the hydraulic pump 23 can continue working, sucking air through the air inlet hole 241 to empty water or cleaning liquid from the cleaned delivery pipeline 33 and mixing device 160. Finally, introduce steam into the mixing device 160 through the electric heating plate and steam pipeline 351 for further cleaning and sterilization of the mixing device 160.

In another aspect, the present application also provides a beverage machine including a controller 80, which includes a memory and a processor. The memory stores a computer program that, when executed by the processor, the computer program is configured to enable the beverage machine to implement the milk beverage dispensing system control method according to any of the above embodiments.

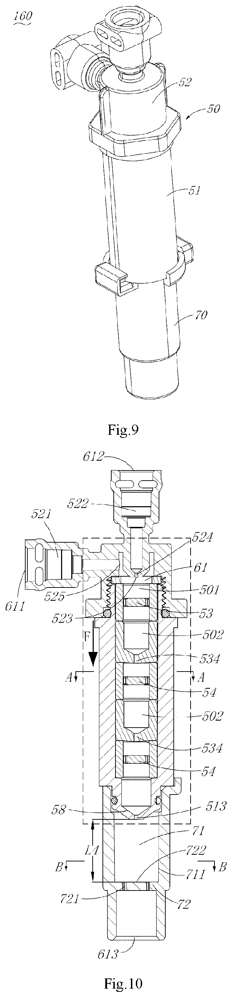

Referring to Figs. 9 to 15, in one embodiment, the mixing device 160 is connected between input pipelines and output pipelines. In the present embodiment, the input pipelines can be used to deliver steam and milk liquid, or a mixture of steam, milk liquid, and air to the mixing device 160. The input pipelines can be, for example, the steam pipeline 351 and delivery pipeline 33 upstream of the mixing device 160 in the above milk beverage dispensing system 100. The mixing device 160 can process the mixture of milk liquid and air to generate milk foam; the output pipeline is used to output the processed milk liquid or milk foam from the mixing device 160, and can be, for example, the pipeline downstream of the mixing device 160 in the above milk beverage dispensing system 100.

Referring to Figs. 9 to 11, the mixing device 160 includes a mixing body 50, the mixing body 50 defines a fluid inlet channel 522 and the mixing chamber 61 arranged along a fluid outflow direction, the fluid inlet channel 522 communicates with the mixing chamber 61. Along the fluid outflow direction, the mixing chamber 61 is disposed downstream of the inlet channel 522. The inlet channel 522 is provided with a fluid inlet 612, and the mixing body 50 is provided with an outlet port 513 at an end toward the output pipeline. The outlet port 513 communicates with the discharge outlet, wherein both the fluid inlet 612 and the outlet port 513 communicate with the mixing chamber 61. The fluid outflow direction can be referred to as arrow F direction in Fig. 10. In some embodiments, the mixture of milk liquid and air to be processed from the input pipeline enters the mixing chamber 61 through the fluid inlet 612 for mixing, then discharges from the mixing chamber 61 through the output port 513, and finally outputs to cups through the output pipeline. For example, the mixing device 160 can output hot milk liquid, cold milk liquid, hot milk foam, or cold milk foam through the output pipeline.

The fluid inlet channel 522 includes a first throttling portion 524, where the fluid inlet channel 522 has the minimum cross-sectional area at the first throttling portion 524.

A front flow splitting plate 53 is arranged in the mixing chamber 61, a first filling space 501 is formed between the fluid inlet channel 522 and the front flow splitting plate 53 for fluid entering the mixing chamber 61. The front flow splitting plate 53 is arranged downstream of the fluid inlet channel 522, the front flow splitting plate 53 has a first blocking portion 531 corresponding to the fluid inlet channel 522 along the fluid outflow direction, a first flow splitting opening 532 is provided at a side of the first blocking portion 531. Along the fluid outflow direction, a projection of the first throttling portion 524 on the first blocking portion 531 is offset from a position of the first flow splitting opening 532.

Since the fluid inlet channel 522 has the minimum cross-sectional area at the first throttling portion 524, the mixture of milk liquid and air input from the fluid inlet channel 522 is compressed and accelerated after passing through the first throttling portion 524, then enters the first filling space 501 in the mixing chamber 61. The mixture of milk liquid and air impacts the front flow splitting plate 53, which is blocked by the first blocking portion 531, converting jet kinetic energy. The mixture of milk liquid and air is broken up by the impact, causing the milk liquid to break into fine droplets, which finally attach to each other to form milk foam effect. The formed milk foam disperses and flows out through the first flow splitting opening 532 at the side of the first blocking portion 531, thus forming a stable milk foam outflow.

Along the fluid outflow direction, the projection of the first throttling portion 524 on the first blocking portion 531 is offset from the position of the first flow splitting opening 532, ensuring the impact blocking effect of the milk liquid and air mixture accelerated through the first throttling portion 524 on the front flow splitting plate 53, avoiding the mixture flowing out directly through the first flow splitting opening 532 without being blocked and impacted by the first blocking portion 531, thereby ensuring the foaming effect of the milk foam.

Additionally, the mixing body 50 also includes a steam channel 521. The fluid inlet 612 is defined by the fluid inlet channel 522, which includes an input port 523 arranged opposite to the fluid inlet 612. The steam channel 521 includes a steam inlet 611 and a steam outlet 525. The input port 523 connects to the mixing chamber 61 along the fluid outflow direction, while the steam outlet 525 connects to the mixing chamber 61 at an angle to the fluid outflow direction; the input port 523 is offset from the steam outlet 525 along the fluid outflow direction.

Correspondingly, the input pipelines also separately deliver milk liquid and steam. The delivery pipeline 33 can deliver cold milk liquid or a cold mixture of milk liquid and air, while the steam pipeline 351 can deliver steam. Based on whether steam is input through the steam pipeline 351, the output pipeline can selectively output hot milk liquid, hot milk foam, cold milk liquid, and cold milk foam. Steam is used to heat cold milk liquid or heat the cold mixture of milk liquid and air. In other words, when the steam pipeline 351 delivers steam, the output pipeline can output hot milk beverages, such as hot milk liquid and hot milk foam; when the steam pipeline 351 does not deliver steam, the output pipeline can output cold milk beverages, such as cold milk liquid and cold milk foam. The offset arrangement of the input port 523 and steam outlet 525 along the fluid outflow direction can reduce mutual interference, ensure steam input volume, and ensure milk foam temperature and mixing uniformity.

The cross-sectional area of the output port 513 is greater than the cross-sectional area of the input port 523, meaning the outflow cross-sectional area of the mixing chamber 61 is greater than the inflow cross-sectional area. This can effectively reduce pressure inside the mixing chamber 61, reduce reverse pressure interference between inflow and outflow channels, and also reduce the impact on steam delivery through the steam pipeline 351.

The cross-sectional area of the steam outlet 525 is greater than that of the input port 523; along the fluid outflow direction, the input port 523 is arranged downstream of the steam outlet 525.

Setting the cross-sectional area of the input port 523 smaller than that of the steam outlet 525 can balance the pressure between the delivery pipeline 33 and steam pipeline 351, avoiding situations where steam cannot enter the mixing chamber 61 through the steam pipeline 351 due to pressure from the mixing chamber 61 and delivery pipeline 33, ensuring reliable operation of the mixing device. Arranging the input port 523 downstream of the steam outlet 525 prevents fluid input from the input port 523 from entering the steam pipeline 351 through the steam outlet 525 and affecting steam input.

In this embodiment, the mixing body 50 includes a tube body 51 and a cover body 52 connected to the tube body 51. The fluid inlet channel 522 is arranged on the cover body 52, the output port 513 is arranged on the tube body 51, and the mixing chamber 61 is jointly defined by the cover body 52 and tube body 51; the front flow splitting plate 53 is arranged inside the tube body 51.

Optionally, both the fluid inlet channel 522 and steam channel 521 are arranged on the cover body 52. The input port 523 and steam outlet 525 are constructed as outlets where the fluid inlet channel 522 and steam channel 521 enter the mixing chamber 61, respectively. That is, the input port 523 is constructed as an outlet where the fluid inlet channel 522 enters the mixing chamber 61, and the steam outlet 525 is constructed as an outlet where the steam channel 521 enters the mixing chamber 61. Arranging the fluid inlet channel 522 on the cover body 52 makes manufacturing of the mixing body 50 more convenient, ensuring dimensional precision of the first throttling portion 524 on the fluid inlet channel 522, thereby further ensuring milk foam quality.

Optionally, at least one secondary filling space 502 and at least one secondary flow splitting plate 54 are arranged in the mixing chamber 61, with the secondary flow splitting plate 54 arranged downstream of the corresponding secondary filling space 502. Multiple first flow splitting openings 532 are arranged at the side of the first blocking portion 531. The secondary filling space 502 connects to the first filling space 501 through multiple first flow splitting openings 532. The output port of the secondary filling space 502 forms a secondary throttling portion 534, where the secondary filling space 502 has the minimum cross-sectional area at the secondary throttling portion 534.

The multiple first flow splitting openings 532 are arranged at intervals around the periphery of the first blocking portion 531; preferably, the multiple first flow splitting openings 532 are evenly spaced.

The secondary flow splitting plate 54 has a second blocking portion 541 corresponding to the secondary throttling portion 534 along the fluid outflow direction. Multiple second flow splitting openings 542 are arranged at the side of the second blocking portion 541. Along the fluid outflow direction, the projection of the secondary throttling portion 534 on the second blocking portion 541 is offset from the positions of the multiple second flow splitting openings 542.

The multiple second flow splitting openings 542 are arranged at intervals around the periphery of the second blocking portion 541; preferably, the multiple second flow splitting openings 542 are evenly spaced.

In one embodiment, one secondary filling space 502 and one secondary flow splitting plate 54 are arranged in the mixing chamber 61, with the secondary flow splitting plate 54 arranged downstream of the secondary filling space 502. The mixture of milk liquid and air input from the delivery pipeline 33 is compressed and accelerated at the first throttling portion 524, then impacts and splits at the front flow splitting plate 53, then undergoes secondary compression and acceleration at the secondary throttling portion 534, and finally impacts and splits again at the secondary flow splitting plate 54. Through two compression-acceleration processes and two impact-splitting processes, high-quality and stable milk foam is formed.

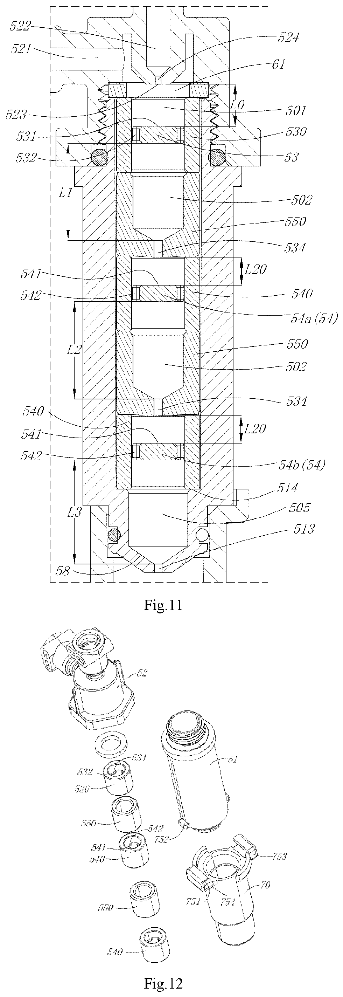

Referring to Fig. 11, at least one secondary flow splitting plate 54 includes an end flow splitting plate 54b near the output port 513. Along the fluid outflow direction, the distance L3 from the end flow splitting plate 54b to the output port 513 is greater than the distance L1 from the front flow splitting plate 53 to the adjacent secondary throttling portion 534. The greater distance L3 from the end flow splitting plate 54b to the output port 513 provides buffering for the final milk foam output from the output port 513, making the output milk foam quality more stable.

Optionally, referring to Fig. 11, at least one secondary flow splitting plate 54 also includes a rear flow splitting plate 54a positioned between the front flow splitting plate 53 and the end flow splitting plate 54b. The distance L3 from the end flow splitting plate 54b to the output port 513 is greater than the distance L2 from the rear flow splitting plate 54a to the adjacent downstream secondary throttling portion 534. The distance L3 from the end flow splitting plate 54b to the output port 513 is set greater than the distance from any upstream flow splitting plate to the adjacent downstream throttling portion, providing buffering for the final milk foam output from the output port 513, making the output milk foam quality more stable.

In one embodiment, along the fluid outflow direction, the front flow splitting plate 53, rear flow splitting plate 54a, and end flow splitting plate 54b are arranged sequentially at intervals in the mixing chamber 61. The mixture of milk liquid and air input from the delivery pipeline 33 undergoes compression and acceleration at the first throttling portion 524, then impacts and splits at the front flow splitting plate 53, then undergoes secondary compression and acceleration at the secondary throttling portion 534, then impacts and splits again at the rear flow splitting plate 54a, then undergoes tertiary compression and acceleration at the next secondary throttling portion 534, and finally impacts and splits at the end flow splitting plate 54b. Through three compression-acceleration processes and three impact-splitting processes, high-quality and stable milk foam is formed.

In the above embodiment, the number of first flow splitting openings 532 is 3 to 6. For example, there can be 4 first flow splitting openings 532 evenly spaced around the centerline of the fluid inlet 612. Similarly, the number of second flow splitting openings 542 is 3 to 6. For example, there can be 4 second flow splitting openings 542 evenly spaced around the centerline of the adjacent upstream secondary throttling portion 534. This arrangement allows more uniform and stable milk foam outflow. The positions of first flow splitting openings 532 and second flow splitting openings 542 around the fluid inlet 612 centerline can be either aligned or offset.

In some embodiments, referring to Fig. 11, the mixing device 160 can be configured as follows: along the fluid outflow direction, there is a first distance L0 between the first throttling portion 524 and the first blocking portion 531. The first throttling portion 524 is constructed as a circular hole, and the first distance L0 is 2 to 10 times the diameter of the first throttling portion 524. Multiple first flow splitting openings 532 are arranged at intervals around the periphery of the first blocking portion 531, defining the outer diameter of the first blocking portion 531. The ratio of the first distance L0 to the outer diameter of the first blocking portion 531 is between 0.6-2.

In some embodiments, referring to Fig. 11, the mixing device 160 can also be configured as follows: along the fluid outflow direction, there is a second distance L20 between the secondary throttling portion 534 and the adjacent downstream second blocking portion 541. The secondary throttling portion 534 is constructed as a circular hole, and the second distance L20 is 2 to 10 times the diameter of the secondary throttling portion 534. Multiple second flow splitting openings 542 are arranged at intervals around the periphery of the second blocking portion 541, defining the outer diameter of the second blocking portion 541. The ratio of the second distance L20 to the outer diameter of the second blocking portion 541 is between 0.6-2.

If the impact distance between the throttling portion and the corresponding downstream blocking portion is too far, kinetic energy of the compressed and accelerated mixture of milk liquid and air will be lost. If too close, the expected impact effect won't be achieved. Additionally, the relationship between the impact distance and the area of the blocking portion also affects milk foam quality. As impact distance increases, the liquid column formed by the mixture begins to diffuse, requiring a larger impact area. If the impact area is too small, some mixture will flow out through side flow splitting openings without impact. The above dimensional relationships optimize fluid velocity and impact distance for a mixture of milk liquid and air, enhancing milk liquid foaming effect.

Continuing to refer to Figs. 9, 10, and 12, pressurized fluid from the delivery pipeline 33 enters the mixing chamber 61 through the fluid inlet 612. In other words, fluid entering the mixing chamber 61 through the fluid inlet 612 is propelled by a pressurizing device on the delivery pipeline 33, such as the hydraulic pump 23, allowing more precise control of fluid velocity and flow rate. In some embodiments, at least one throttling portion and flow splitting plate can be arranged at any position between the fluid inlet 612 and output port 513.

Optionally, the mixing device includes at least one fluid channel and at least one flow splitting plate, with the number of fluid channels matching the number of flow splitting plates, forming one-to-one correspondence. The fluid channels are arranged between the fluid inlet 612 and output port 513, each including a throttling portion where the cross-sectional area is minimum. The flow splitting plates are arranged in the mixing chamber 61 downstream of the corresponding fluid channels. Each flow splitting plate has a blocking portion corresponding to the fluid channel along the fluid outflow direction, with flow splitting openings arranged at the side. Along the fluid outflow direction, the projection of the throttling portion on the blocking portion is offset from the positions of the flow splitting openings.

Each blocking portion has multiple flow splitting openings, numbering 3 to 6. For example, there can be 4 flow splitting openings evenly spaced around the centerline of the fluid inlet 612, enabling more uniform and stable milk foam outflow.

For example, referring to Figs. 10 and 11, the fluid channel can be defined by either the fluid inlet channel 522 or any secondary filling space 502. Correspondingly, the flow splitting plate can be defined by either the front flow splitting plate 53 or any secondary flow splitting plates 54, such as the rear flow splitting plate 54a or the end flow splitting plate 54b. That is, the flow splitting plate can be defined by the front flow splitting plate 53, the rear flow splitting plate 54a, or the end flow splitting plate 54b.

For example, the at least one fluid channel may include the fluid inlet channel 522 and any number of secondary filling spaces 502; correspondingly, the at least one flow splitting plate may include the front flow splitting plate 53 and any number of secondary flow splitting plates 54.

The throttling portion can be defined by either the first throttling portion 524 or the secondary throttling portion 534.

The blocking portion can be defined by either the first blocking portion 531 or the second blocking portion 541; the flow splitting opening can be defined by either the first flow splitting opening 532 or the second flow splitting opening 542.

Along the fluid outflow direction, an impact distance exists between the throttling portion and the adjacent downstream blocking portion; multiple flow splitting openings are arranged at intervals around the periphery of the blocking portion, the multiple flow splitting openings defining the outer diameter of the blocking portion; and the throttling portion is configured as a circular hole. To optimize fluid velocity and impact distance for a mixture of milk liquid and air, in one exemplary embodiment, the mixing device 160 is configured such that, the impact distance is 2 to 10 times the diameter of the throttling portion, and a ratio of the impact distance to the outer diameter of the blocking portion is between 0.6-2. In another exemplary embodiment, the mixing device 160 is configured such that, the throttling portion has a diameter of 0.6-1 mm, the impact distance is 3-5 mm, and the blocking portion has an outer diameter of 4-6 mm.

The impact distance can be the distance between any throttling portion and the adjacent downstream blocking portion, such as the first distance L0 between the first throttling portion 524 and the first blocking portion 531, or the second distance L20 between any secondary throttling portion 534 and the adjacent downstream second blocking portion 541.

The dimensional settings of the throttling portions, impact distances, and blocking portions optimize fluid velocity and impact distance for a mixture of milk liquid and air in a more compact mixing device 160, enhancing milk liquid foaming effect.

In one embodiment, the at least one fluid channel includes a first fluid channel and a second fluid channel, and the at least one flow splitting plate includes a first flow splitting plate and a second flow splitting plate. The mixing body 50 includes a tube body 51 and a cover body 52 connected to the tube body 51, the fluid inlet 612 is arranged on the cover body 52, and the output port 513 is arranged on the tube body 51. The mixing chamber 61 is jointly defined by both the tube body 51 and the cover body 52. The first fluid channel, first flow splitting plate, second fluid channel, and second flow splitting plate are arranged sequentially along the fluid outflow direction. The first fluid channel is arranged on the cover body 52, while the first flow splitting plate, second fluid channel, and second flow splitting plate are arranged inside the tube body 51.

Optionally, the first fluid channel is defined by the fluid inlet channel 522, the second fluid channel is defined by the secondary filling space 502, the first flow splitting plate is defined by the front flow splitting plate 53, and the second flow splitting plate is defined by the secondary flow splitting plate. Optionally, the second flow splitting plate is defined by either the rear flow splitting plate 54a or end flow splitting plate 54b. This means fluid enters the fluid inlet channel 522 and undergoes throttling and flow splitting twice, with double-layer impact creating better milk foam effect through breaking up and re-attachment.

The mixture of milk liquid and air input from the delivery pipeline 33 is compressed and accelerated at the first fluid channel's throttling portion, then impacts and splits at the first flow splitting plate, then undergoes secondary compression and acceleration at the second fluid channel's throttling portion, and finally impacts and splits at the second flow splitting plate. Through two compression-acceleration processes and two impact-splitting processes, high-quality and stable milk foam is formed.

Optionally, referring to Fig. 11, the mixing chamber 61 provides a first flow splitting component 530, a second flow splitting component 540, and a first flow limiting component 550. The first flow splitting component 530 includes the first flow splitting plate (front flow splitting plate 53), the second flow splitting component 540 includes the second flow splitting plate (secondary flow splitting plate 54), and the second fluid channel (secondary filling space 502) is defined by the first flow limiting component 550. Along the fluid outflow direction, the first flow splitting component 530, first flow limiting component 550, and second flow splitting component 540 are sequentially abutted. A limiting portion 514 is provided in the mixing chamber 61, the second flow splitting component 540 near the output port 513 abutting against the limiting portion 514, making the arrangement of flow splitting components and flow limiting components in the mixing chamber 61 more reliable.

The dimensions of various channels, flow splitting openings, and throttling portions in the mixing device 160 require very strict tolerance control. Even slight variations in throttling portion diameter can cause significant changes in results. By setting up flow splitting components and flow limiting components to separately arrange corresponding flow splitting plates and throttling portions, manufacturing becomes more convenient, dimensions can be more precise, and milk foam quality becomes more stable, ensuring the final output foam effect.

In other embodiments, at least one fluid channel includes at least two fluid channels, and at least one flow splitting plate includes at least two flow splitting plates. Along the fluid outflow direction, fluid channels and flow splitting plates are arranged alternately. An end contraction chamber 505 is defined between the flow splitting plate near the output port 513 and the output port 513. Along the fluid outflow direction, the end contraction chamber 505 contracts toward the output port 513, and the diameter of the output port 513 is greater than the diameter of the fluid inlet 612.

For example, the at least two fluid channels may include the fluid inlet channel 522 and one secondary filling space 502, or any two secondary filling spaces 502. Correspondingly, the at least two flow splitting plates may include the front flow splitting plate 53 and any secondary flow splitting plate 54, or any two secondary flow splitting plates 54.

The alternating arrangement of fluid channels and flow splitting plates allows the mixture of milk liquid and air to undergo multiple compression-acceleration processes, with impact and re-mixing after each acceleration. The mixture is continuously broken up by impacts, forming finer droplets, which finally attach to each other to form finer milk foam. Through stage-by-stage mixing and flow splitting, the final output milk foam becomes more uniform and stable.

Optionally, three each of throttling portions and flow splitting plates are set, ensuring multiple stages of breaking and mixing while keeping the mixing device 160 volume suitable for arrangement in the beverage machine.

Referring to Fig. 9 and Fig.12, in some embodiments, the mixing device 160 further includes a buffer tube 70, the buffer tube 70 is connected downstream of the mixing body 50, the buffer tube 70 defines a buffer chamber 71 arranged along the fluid outflow direction, one end of the buffer chamber 71 is in communication with the output port 513, a baffle plate 72 is provided at another end of the buffer chamber 71, the baffle plate 72 is arranged opposite to the output port 513 along the fluid outflow direction. Along the fluid outflow direction, the length L4 of the buffer chamber 71 is greater than the distance from any secondary flow splitting plate 54 to the adjacent downstream secondary throttling portion 534.

Specifically, the length L4 of the buffer chamber 71 is greater than the distance L3 from the end flow splitting plate 54b to the output port 513; the length L4 of the buffer chamber 71 is greater than the distance L2 from the rear flow splitting plate 54a to the adjacent downstream secondary throttling portion 534; the length L4 of the buffer chamber 71 is greater than the distance L1 from the front flow splitting plate 53 to the adjacent secondary throttling portion 534. The length L4 of the buffer chamber 71 is set greater than the distance from any flow splitting plate to the adjacent throttling portion 534.

By setting up the length L4 of the buffer chamber 71 greater than the distance from any flow splitting plate to the adjacent secondary throttling portion 534, the milk foam output from the output port 513 can buffer and accumulate in the buffer chamber 71, increasing foam viscosity and preventing bubble formation in the cup that would reduce foam quality. Having all distances between flow splitting plates and the corresponding adjacent secondary throttling portions 534 less than the buffer chamber length L4 saves length in the foaming device 160, reducing the volume of the foaming device 160 while ensuring foam viscosity, and also reduces beverage residue in the foaming device 160 after beverage preparation.

Multiple through holes 721 are provided on the baffle plate 72, the baffle plate 72 has an intercepting portion 722 corresponding to the output port 513 along the fluid outflow direction, the multiple through holes 721 are provided around the periphery of the intercepting portion 722, the buffer tube 70 comprises a chamber wall 711 defining the buffer chamber 71, the baffle plate 72 is arranged within the chamber wall 711, the multiple through holes 721 are arranged at intervals from the chamber wall 711.

The baffle plate 72 provided at the buffer chamber 71 outlet forms a blockage. Fluid flowing out of the buffer chamber 71 decelerates at the intercepting portion 722, then diffuses to the sides of the intercepting portion 722, reflects after hitting the chamber wall 711, and flows out through multiple through holes 721 in different directions from the diffusion and reflection directions, allowing fluid to flow slowly into the output pipeline and ultimately producing stable milk foam output at the beverage outlet of the beverage machine.

The setup of the buffer chamber 71 and intercepting portion 722 prevents direct rapid output of low-viscosity milk foam from the output port 513 to the output pipeline, avoiding bubble formation in the cup and ensuring output foam quality. Multiple through holes 721 arranged around the intercepting portion 722 and spaced from the chamber wall 711 allow fluid blocked and diffused at the intercepting portion 722 to reflect after hitting the chamber wall 711, further absorbing foam kinetic energy and providing additional deceleration buffering, further ensuring foam stability and quality.

Optionally, the intercepting portion 722 is arranged opposite to the output port 513, with multiple through holes 721 spaced around the intercepting portion 722. The through holes 721 are configured as fan-ring shaped openings concentric with the intercepting portion 722. The output port 513 is configured as a circular outlet, with the inner radius of the fan-ring being 6-12 times the radius of the output port 513, or the spacing between the outer and inner rings of the fan-ring being greater than the diameter of the output port 513.

Multiple fan-rings define the intercepting portion 722, with the inner radius of the fan-ring matching the radius of the intercepting portion 722. If the inner radius of the fan-ring is too small, the foam blocking and deceleration effect is poor; if too large, it leads to excessive buffer tube 70 outer diameter, unfavorable for miniaturization of the mixing device.

The through holes 721 are constructed as fan-ring shaped openings concentric with the intercepting portion 722. When milk foam discharges from the output port 513 to the buffer chamber 71, it impacts the intercepting portion 722 under gravity, then diffuses to its periphery. Under the inertia of lateral diffusion, the fan-ring shaped through holes 721 allow more foam to change flow direction and exit. The design of the position and dimensions of the fan-ring through holes 721 optimizes the ratio between foam flowing out through the through holes and foam continuing to mix in the buffer chamber 71 per unit time, ultimately producing higher quality foam output to cups.

To better accumulate foam in the buffer chamber 71, the length L4 of the buffer chamber 71 along the fluid outflow direction is greater than or equal to 10mm, or one-fifth to one-half of the length of the mixing chamber 61. This allows foam to develop optimal viscosity without foam collapse from excessive accumulation time.

In the present embodiment, the number of through holes 721 is 3 to 6. Optionally, there can be 4 through holes 721 evenly spaced around the centerline of the output port 513. This arrangement allows more uniform and stable milk foam outflow.

For example, the mixing device 160 can be configured so that along the fluid outflow direction, there is a refilling distance between the blocking portion and the adjacent downstream throttling portion, with the length L4 of the buffer chamber 71 greater than the refilling distance.

For example, the mixing device 160 can also be configured with multiple fluid channels and flow splitting plates, with refilling distances between blocking portions and the corresponding adjacent downstream throttling portions either equal or increasing along the fluid outflow direction.

The refilling distance can be the distance L1 from the front flow splitting plate 53 to the adjacent secondary throttling portion 534, or the distance L2 from the rear flow splitting plate 54a to the adjacent downstream secondary throttling portion 534, or the distance L3 from the end flow splitting plate 54b to the output port 513. That is, the length L4 of the buffer chamber 71 can be greater than the length of any of the secondary filling space 502. The length L4 of the buffer chamber 71 can also be greater than the length of one of the secondary filling spaces 502 or the length of the end contraction chamber 505.

Optionally, referring to Fig. 12, either the buffer tube 70 or mixing body 50 provides a first slot 751, while the other provides corresponding first fixing rib 752. The first fixing rib 752 is inserted into the first slot 751 to restrict relative movement between the buffer tube 70 and the mixing body 50 along the fluid outflow direction. Relative rotation between the buffer tube 70 and the mixing body 50 enables insertion or removal of the first fixing rib 752 from the first slot 751. The engagement between the first fixing rib 752 and the first slot 751 enables quick-release connection between the buffer tube 70 and the mixing body 50. A small-angle relative rotation can achieve rapid disassembly and assembly, facilitating production assembly and later maintenance of mixing device. Moreover, the structure of the first fixing rib 752 and the first slot 751 is simple and easy to manufacture.

In the present embodiment, the first fixing rib 752 is provided on the mixing body 50, and the first slot 751 is provided on the buffer tube 70. Two first slot 751 may be provided, spaced at intervals along the circumference of the buffer tube 70. Correspondingly, two first fixed ribs 752 are provided, spaced at intervals along the circumference of the mixing body 50. This arrangement enhances the stability of the quick-release connection between the buffer tube 70 and the mixing body 50.

Along a rotational direction of the buffer tube 70 relative to the mixing body 50, each first slot 751 is provided with a first closed end 753 and a first open end 754 arranged relative to each other. The relative rotation of the buffer tube 70 and the mixing body 50 causes the first fixing rib 752 to enter the first slot 751 from the first open end 754 until abutting against the first closed end 753. When disassembling the buffer tube 70 and mixing body 50, only a small angular relative rotation of the buffer tube 70 and mixing body 50 is required to separate the first fixing rib 752 from the first open end 754 and out of the first slot 751. When assembling the buffer tube 70 and the mixing body 50, only a small-angle relative rotation of the buffer tube 70 and the mixing body 50 in the opposite direction is required to allow the fixing rib 752 to enter the first slot 751 from the first open end 754 until abutting against the first closed end 753. The assembling and disassembling of the buffer tube 70 and mixing body 50 can be achieved with a small-angle relative rotation, making the operation very convenient. This avoids excessive twisting of input/output lines that would occur during large-angle or multi-turn rotation between the buffer tube 70 and mixing body 50, thereby significantly reducing the twisting of the input and/or output pipelines.

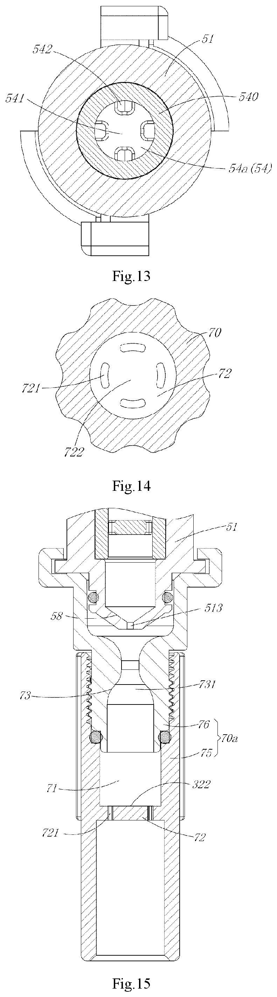

Referring to Fig. 15, a flow limiting portion 73 is provided in the buffer chamber 71, the flow limiting portion 73 is arranged adjacent to the output port 513, the flow limiting portion 73 defines a flow limiting channel 731. Along the fluid outflow direction, a cross-sectional area of the flow limiting channel 731 is in an increasing trend, or the cross-sectional area of the flow limiting channel 731 shows a trend of first decreasing and then increasing. As shown in Fig. 15, the cross-sectional area of the flow limiting channel 731 shows a trend of first decreasing then increasing. This design further reduces foam flow velocity in the buffer chamber 71, allowing additional mixing to increase density.

The buffer tube 70a includes interconnected main tube body 75 and buffer component 76. The buffer component 76 connects between the main tube body 75 and mixing body 50 with sealed connections, and the flow limiting portion 73 is provided on the buffer component 76, that is, the flow limiting channel 731 is defined in buffer component 76. The output port 513 extends into the buffer component 76 toward the flow limiting channel 731, with part of the buffer component 76 extending into the buffer chamber 71. The separate buffer component 76 facilitates flow limiting portion 73 manufacturing, improving flow limiting channel 731 manufacturing precision and ensuring more stable and reliable foam output quality.

Referring to Fig.s 16 to 23, another embodiment shows a mixing device 260 connected between input and output pipelines. In the present embodiment, the input pipeline is configured to deliver steam and milk liquid, or a mixture of steam, milk liquid, and air. The output pipeline is configured to output processed milk liquid or milk foam generated from the mixing device 260.

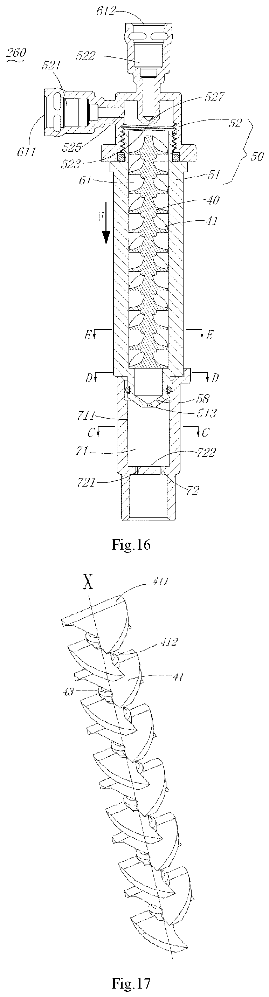

The mixing device 260 includes a mixing body 50, the mixing body 50 defines the mixing chamber 61 arranged along a fluid outflow direction. The mixing chamber 61 is provided with an input port 523 and a steam outlet 525 at an end toward the delivery pipeline 33, and the mixing chamber 61 is provided with an outlet port 513 at an end toward the output pipeline. The fluid outflow direction can be referred to as arrow F direction in Fig. 16. In some embodiments, the mixture of milk liquid and air to be processed from the delivery pipeline 33 enters the mixing chamber 61 through the input port 523 for mixing, then discharges from the mixing chamber 61 through the output port 513, and finally outputs to cups through the output pipeline. The steam outlet 525 connects to the mixing chamber 61 at an angle to the fluid outflow direction; the input port 523 is offset from the steam outlet 525 along the fluid outflow direction.

Correspondingly, the input pipelines also separately deliver milk liquid and steam. The input pipelines include the delivery pipeline 33 and the steam pipeline 351, with specific structure and effects identical to those of the above mixing device 160, which won't be repeated here.

To provide better quality foam, a mixer 40 is provided in the mixing chamber 61, enabling more thorough mixing of the milk liquid and air mixture to form finer foam.

The cross-sectional area of the output port 513 is greater than the cross-sectional area of the input port 523, by providing the cross-sectional area of the outlet of the mixing chamber 61 to be larger than the cross-sectional area of the inlet, effectively reducing internal pressure in the mixing chamber 61 and minimizing reverse pressure interference between inflow and outflow channels.

The cross-sectional area of the steam outlet 525 is greater than the cross-sectional area of the input port 523; along the fluid outflow direction, the input port 523 is downstream of the steam outlet 525.

Setting the cross-sectional area of the input port 523 smaller than the cross-sectional area of the steam outlet 525 balances pressure between the delivery pipeline 33 and steam pipeline 351, ensuring reliable operation of mixing device 260. Placing the input port 523 downstream of the steam outlet 525 prevents input fluid from entering the steam outlet 525 and affecting steam input.

The mixing body 50 includes a tube body 51 and a cover body 52 connected to the tube body 51. The mixing chamber 61 is jointly defined by the cover body 52 and mixing body 50. The cover body 52 provides with a fluid inlet channel 522 connected to the input port 523, the fluid inlet channel 522 includes an inlet throttling portion 527 located at the end near the mixer 40, the fluid inlet channel 522 has the minimum cross-sectional area at the inlet throttling portion 527. The input port 523 can be the opening of the inlet throttling portion 527 facing the mixer 40. Placing the inlet throttling portion 527 near the mixer 40 allows compressed and accelerated milk liquid and air to collide and be cut by the mixer 40 more quickly, increasing foam smoothness.

Optionally, a buffer tube 70 connects downstream of the mixing body 50, with specific structure and effects identical to those of the above mixing device 160, which won't be repeated here.

In some embodiments, the mixing body 50 connects to the buffer tube 70 with a seal and extends into the buffer tube 70, with a contraction portion 58 at the extending end. Along the fluid outflow direction, the contraction portion 58 contracts to form the output port 513. This final compression and mixing of foam at the output port 513 further improves output foam quality.

Referring to Fig.s 17 and 20, the mixer 40 includes multiple spiral blades 41 arranged sequentially along the fluid outflow direction, with adjacent blades spiraling in opposite directions. Along the fluid outflow direction, each spiral blade 41 includes a starting end face 411 and an opposite ending end face 412. The spiral blades 41 satisfy at least one of these features:
the mixer 40 has a spiral centerline X along the fluid outflow direction, with spiral blades 41 arranged spirally around the spiral centerline X; the starting end face 411 and ending end face 412 of spiral blades 41 are set at an angle; the projections of starting end faces 411 of adjacent spiral blades 41 along the fluid outflow direction partially overlap; the projections of ending end faces 412 of adjacent spiral blades 41 along the fluid outflow direction partially overlap; the outer diameter of spiral blades 41 is greater than their height along the fluid outflow direction; the mixer 40 includes at least ten spiral blades 41.

The multiple spiral blades 41 arranged in a spiral sequence around the spiral centerline X with adjacent blades spiraling in opposite directions cause the milk liquid and air mixture to be cut from different directions, then remixed, then cut again. Milk liquid and air mixture to be cut and remixed from different directions repeatedly, forming finer foam.

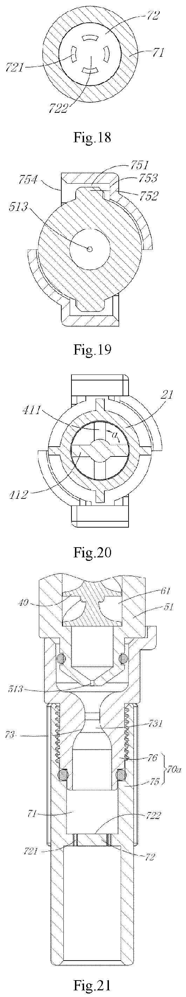

The starting end face 411 and ending end face 412 of spiral blades 41 are set at an angle α (as shown in Fig. 20), that is the longitudinal direction of the starting end face 411 and the longitudinal direction of the ending end face 412 are set at an angle. The starting end face 411 and ending end face 412 are roughly rectangular, with the longitudinal direction being the length direction. The angle between the starting end face 411 and the ending end face 412 can be considered as the angle rotated by the starting end face 411 around the spiral centerline to the ending end face 412, or the angle rotated by the ending end face 412 around the spiral centerline to the starting end face 411, preferably between 60 and 100 degrees, optionally 90 degrees. This angular arrangement between the starting end face 411 and the ending end face 412 changes foam flow direction while slowing it down, allowing the next starting end face 411 to cut the foam again, improving output foam quality.

The partial overlap of projections of starting end faces 411 of adjacent spiral blades 41 along the fluid outflow direction means starting end faces 411 of adjacent spiral blades 41roughly correspond along the fluid outflow direction. The partial overlap of projections of ending end faces 412 of adjacent spiral blades 41 along the fluid outflow direction means ending end faces 412 of adjacent spiral blades 41 roughly correspond along the fluid outflow direction. Alternatively, the longitudinal directions of starting end faces 411 of adjacent spiral blades 41 can be roughly parallel, and the longitudinal directions of ending end faces 412 of adjacent spiral blades 41 can be roughly parallel. This creates regular cutting and remixing of flowing foam, producing more uniform output foam.

In some embodiments, the projections of starting end faces 411 of adjacent spiral blades 41 along the fluid outflow direction completely overlap, and the projections of ending end faces 412 of adjacent spiral blades 41 along the fluid outflow direction completely overlap. That is, the projections of all starting end faces 411 of spiral blades 41 overlap, as do all ending end faces 412 of spiral blades 41, facilitating the manufacturing of mixer 40.

The outer diameter of spiral blades 41 being greater than the height of spiral blades 41 along the fluid outflow direction means foam is cut after flowing a short distance along the spiral surface, then flows to the spiral surface of the next blade for cutting in another direction. More foam can be cut and remixed more times over shorter distances, ensuring finer final output foam while helping reduce the volume of the mixing device 260.

Providing at least ten spiral blades 41 ensures thorough cutting and remixing of the milk liquid and air mixture, producing finer and thicker output foam, guaranteeing foam quality. Connecting rods 43 are provided between adjacent spiral blades 41, i.e., the connecting rods 43 connect the adjacent spiral blades 41. The middle of the starting end faces 411 and the middle of the ending end faces 412 of the spiral blade 41 are connected to the connecting rods 43, enhancing the overall strength of mixer 40.

The mixing body 50 includes a tube body 51 and cover body 52 connected to the tube body 51. The mixing chamber 61 is jointly defined by the cover body 52 and tube body 51, the input port 523 is provided on the cover body 52. The cover body 52 is provided with a fluid inlet channel 522 connected to the input port 523. Optionally, the fluid inlet channel 522 is in communication with the mixing chamber 61 through the input port 523. The fluid inlet channel 522 extends into the mixing chamber 61 toward mixer 40, guiding input fluid toward the mixer 40 for gradual, uniform cutting and remixing along the direction of spiral blades 41, producing more consistent output foam.

Referring to Fig. 19, either the buffer tube 70 or mixing body 50 provides a first slot 751, while the other provides corresponding first fixing rib 752. The first fixing rib 752 and the first slot 751 are set up the same as in the above-mentioned mixing device 160. Referring to Fig. 21, in some embodiments, a flow limiting portion 73 is provided in the buffer chamber 71. The buffer tube 70a includes interconnected main tube body 75 and buffer component 76, with flow limiting portion 73 and buffer tube 70a arranged as in the above-mentioned mixing device 160.

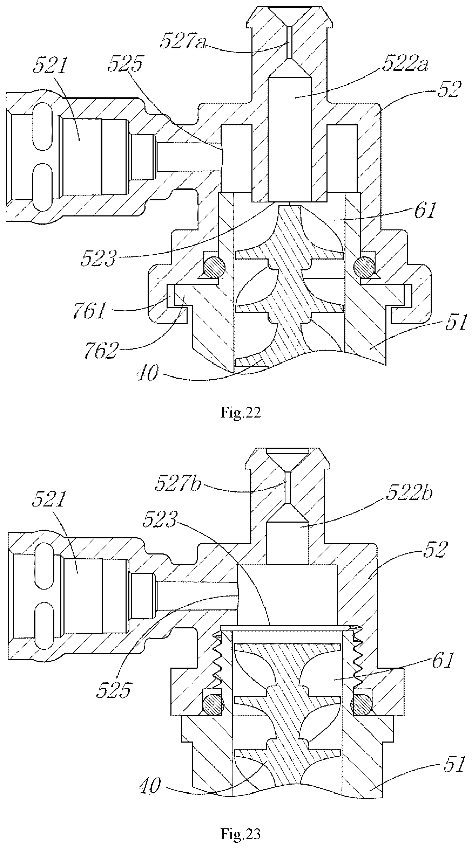

Referring to Fig. 22, in some embodiments, the mixing body 50 and cover body 52 of mixing device 260 are detachably connected, jointly defining mixing chamber 61, with input port 523 on the cover body 52. The cover body 52 provides with a fluid inlet channel 522a connected to the input port 523 The fluid inlet channel 522a includes an inlet throttling portion 527a located either between the two ends of the fluid inlet channel 522a or near the mixer 40, the fluid inlet channel 522a has the minimum cross-sectional area at the inlet throttling portion 527a.

As shown in Fig. 22, inlet throttling portion 527a is provided between the two ends of the fluid inlet channel 522a. The mixing chamber 61 is defined by the detachable mixing body 50 and cover body 52, facilitating the installation of the mixer 40 in the mixing chamber 61, and the cover body 52 is easy to manufacture, which reduces the cost of the mixing device 260.

Additionally, referring to Fig. 22, either the cover body 52 or main body 51 is provided with second fixing ribs 762, while the other is provided with corresponding second slots 761. The second fixing ribs 762 insert into second slots 761 to restrict relative movement between cover body 52 and main body 51 along the fluid outflow direction. Relative rotation between cover body 52 and main body 51 enables insertion or removal of second fixing ribs 762 from second slots 761.

The engagement between second fixing ribs 762 and second slots 761 enables quick-release connection between the cover body 52 and the main body 51. A small-angle relative rotation can achieve rapid disassembly and assembly between the cover body 52 and the main body 51, facilitating production assembly and later maintenance of mixing device 260. Moreover, the structure of second fixing ribs 762 and second slots 761 is simple and easy to manufacture.

Additionally, first slots 751 and first fixing ribs 752, along with second slots 761 and second fixing ribs 762, can be arranged so that rotation of the main body 51 in one direction simultaneously connects with both cover body 52 and buffer tube 70. Similarly, rotation in the same direction can achieve simultaneous disconnection, making assembly and disassembly of the main body 51 and the cover body 52, as well as the main body 51 and the buffer tube 70 more convenient.

The fluid inlet channel 522a extends into mixing chamber 61 toward mixer 40, guiding input fluid toward the mixer 40 for gradual, uniform cutting and remixing along the direction of the spiral blades 41, producing more consistent output foam.

Referring to Fig. 23, in some embodiments, the input port 523 is provided on the cover body 52, the cover body 52 is provided with a fluid inlet channel 522b connected to the input port 523, the fluid inlet channel 522b includes an inlet throttling portion 527b located between the two ends of the fluid inlet channel 522b, the fluid inlet channel 522b has the minimum cross-sectional area at the inlet throttling portion 527b. Placing inlet throttling portion 527b between the two ends of the fluid inlet channel 522b allows milk liquid and air to be compressed and accelerated, breaking up large bubbles formed during mixing, improving foam quality. Placing the inlet throttling portion 527b on the cover body 52 facilitates manufacturing and ensures dimensional precision, further guaranteeing foam quality.

Along the fluid outflow direction, the cross-sectional area of the fluid inlet channel 522b gradually increases from the inlet throttling portion 527b, either in steps, linearly, or a combination of both. This allows the compressed and accelerated mixture to spread more effectively onto the spiral blades 41 of the mixer 40 for better subsequent cutting and remixing.

In the above embodiments, the input pipeline can connect to an output end of a pump for pressurized fluid. For example, milk liquid or milk liquid and air mixture to be processed is delivered to the input pipeline by the hydraulic pump 23, then to the mixing chamber 61. Using the hydraulic pump 23 for active input milk liquid or milk liquid and air mixture to the mixing chamber 61 allows preparation of both hot and cold milk liquid and foam, offering users more choices as compared to the use of a venturi inhalation.

A beverage machine with the above mixing device can output multiple beverage modes and perform more comprehensive automatic pipeline cleaning, ensuring beverage output quality and safety.

## Claims

1. A control method for a milk beverage dispensing system (100, 200), applied to the milk beverage dispensing system (100, 200), wherein the milk beverage dispensing system (100, 200) comprises:
a mixing device (160,260), comprising a mixing chamber (61), the mixing chamber (61) having a steam inlet (611), a fluid inlet (612) and a discharge outlet (613);
a steam generator (35), connected to the steam inlet (611), configured to generate steam;
a hydraulic pump (23), connected between a milk supply source (21) and the fluid inlet (612);
**characterized in that**, the control method comprises the following steps:
receiving a milk beverage preparation signal;
when determining that a beverage mode corresponding to the milk beverage preparation signal is a beverage mode indicating steam output, controlling a pressure relief pipeline (352) of the steam generator (35) to open for a first preset duration, and controlling the steam generator (35) to heat up during the first preset duration;
after the first preset duration, controlling the hydraulic pump (23) to activate for delivering milk liquid from the milk supply source (21) to the mixing chamber (61), and controlling the steam generator (35) to deliver the steam to the mixing chamber (61), wherein the steam enters the mixing chamber (61) not later than the milk liquid.

2. The control method according to claim 1, wherein the milk beverage dispensing system (100, 200) further comprises an air valve (24), the air valve (24) is connected to a delivery pipeline (33) between the milk supply source (21) and the hydraulic pump (23); the steam generator (35) is configured as an electric heating plate, the milk beverage dispensing system (100, 200) further comprises an electromagnetic pump (34) connected between a water supply source (22) and the electric heating plate; the electric heating plate is connected to the steam inlet (611) through a steam pipeline (351);
the controlling the steam generator (35) to heat up during the first preset duration comprises: controlling the electric heating plate to heat up during the first preset duration;
during the first preset duration, the control method further comprises: controlling the electromagnetic pump (34) to deactivate, and controlling the steam pipeline (351) to close;
after the first preset duration, the control method further comprises: controlling the pressure relief pipeline (352) to close.

3. The control method according to claim 2, wherein after the first preset duration, the control method further comprises:
controlling the electromagnetic pump (34) to activate and controlling the steam pipeline (351) to open simultaneously, to deliver the steam to the mixing chamber (61);
controlling the hydraulic pump (23) to activate for delivering the milk liquid to the mixing chamber (61), wherein the activation of the hydraulic pump (23) is delayed by a second preset duration relative to the activation of the electromagnetic pump (34), so that the steam enters the mixing chamber (61) earlier than the milk liquid; or
wherein after the first preset duration, the control method further comprises:
controlling the electromagnetic pump (34) and the hydraulic pump (23) to activate;
controlling the electromagnetic pump (34) to deactivate after the electromagnetic pump (34) activates for a third preset duration;
controlling the steam pipeline (351) to open and controlling the electromagnetic pump (34) to activate after the hydraulic pump (23) activates for a fourth preset duration, wherein the fourth preset duration is longer than the third preset duration.

4. The control method according to claim 2, wherein the milk beverage preparation signal comprises milk beverage parameter information, and the control method further comprises:
determining a working duration of the hydraulic pump (23) based on the milk beverage parameter information;
controlling the hydraulic pump (23) and the electromagnetic pump (34) to deactivate based on the working duration of the hydraulic pump (23), wherein the deactivation of the electromagnetic pump (34) precedes the deactivation of the hydraulic pump (23) by a fifth preset duration.

5. The control method according to claim 2, wherein the milk beverage dispensing system (100, 200) further comprises a control valve (38), the delivery pipeline (33) is connected to the control valve (38), a water inlet pipeline (32) is connected between the water supply source (22) and the control valve (38), the air valve (24) comprises an outlet conduit (243), the outlet conduit (243) is connected in series between the control valve (38) and the hydraulic pump (23), and the control method further comprises:
receiving a cleaning signal;
controlling the control valve (38) to change direction to connect the water inlet pipeline (32) to the hydraulic pump (23);
controlling the air valve (24) to close, controlling the water inlet pipeline (32) to open, and controlling the hydraulic pump (23) to activate, wherein under action of the hydraulic pump (23), water in the water inlet pipeline (32) flows through the outlet conduit (243) and then enters the mixing chamber (61), and then is discharged through the discharge outlet (613);
after reaching preset cleaning parameters, controlling the air valve (24) to open, controlling the water inlet pipeline (32) to close, wherein under action of the hydraulic pump (23), air flows through the outlet conduit (243) and then enters the mixing chamber (61), and then is discharged through the discharge outlet (613);
controlling the hydraulic pump (23) to deactivate after the air valve (24) opens for a sixth preset duration;
controlling the electric heating plate to heat up, controlling the electromagnetic pump (34) to activate, controlling the steam pipeline (351) to open, so that steam in the steam pipeline (351) enters the mixing chamber (61) and then is discharged through the discharge outlet (613); or
the control method further comprises:
receiving a cleaning signal;
controlling the control valve (38) to change direction to connect the water inlet pipeline (32) to the hydraulic pump (23);
controlling the air valve (24) to close, controlling the water inlet pipeline (32) to open, and controlling the hydraulic pump (23) to activate, wherein under action of the hydraulic pump (23), water in the water inlet pipeline (32) flows through the outlet conduit (243) and then enters the mixing chamber (61), and then is discharged through the discharge outlet (613);
after reaching preset cleaning parameters, controlling the water inlet pipeline (32) to close and controlling the hydraulic pump (23) to deactivate; controlling the electric heating plate to heat up, controlling the electromagnetic pump (34) to activate, controlling the steam pipeline (351) to open, so that steam in the steam pipeline (351) enters the mixing chamber (61) and then is discharged through the discharge outlet (613);
after reaching preset steam parameters, controlling the steam pipeline (351) to close, controlling the air valve (24) to open, and
controlling the hydraulic pump (23) to activate, wherein under action of the hydraulic pump (23), air flows through the outlet conduit (243) and then enters the mixing chamber (61), and then is discharged through the discharge outlet (613);
controlling the hydraulic pump (23) to deactivate after the air valve (24) opens for a sixth preset duration.

6. The control method according to claim 1, wherein the milk beverage dispensing system (100, 200) further comprises a beverage outlet (25) connected to the discharge outlet (613), a drain pump (37) is provided between the discharge outlet (613) and the beverage outlet (25), and the control method further comprises:
controlling the drain pump (37) to activate after reaching the working duration of the hydraulic pump (23); or
the control method further comprises:
when the beverage mode corresponding to the milk beverage preparation signal is a beverage mode indicating steam output, or the beverage mode corresponding to the milk beverage preparation signal is a beverage mode indicating air input, controlling the drain pump (37) to activate within an eighth preset duration after the hydraulic pump (23) activates, to intercept the flow of beverage output from the discharge outlet (613) to the beverage outlet (25).

7. The control method according to claim 2, wherein in the beverage mode indicating steam output, obtaining the temperature of the milk liquid output from the milk supply source (21), the control method further comprises at least one of the following steps:
a) when the temperature of the milk liquid is lower than a first preset value, reducing PWM duty cycle of the hydraulic pump (23) to decrease milk liquid flow rate; when the temperature of the milk liquid is higher than a second preset value, increasing PWM duty cycle of the hydraulic pump (23) to increase milk liquid flow rate, wherein the first preset value is less than the second preset value;
b) when the temperature of the milk liquid is lower than a first preset value, increasing a pulse ratio of on-duration to off-duration of the electromagnetic pump (34) operation to increase water speed pumped into the electric heating plate; when the temperature of the milk liquid is higher than a second preset value, decreasing the pulse ratio of on-duration to off-duration of the electromagnetic pump (34) operation to decrease water speed pumped into the electric heating plate, wherein the first preset value is less than the second preset value;
c) when the temperature of the milk liquid is lower than a first preset value, calculating a ratio of the temperature of the milk liquid to a standard temperature, controlling the air valve (24) to increase an area of an air inlet hole (241) based on the ratio; when the temperature of the milk liquid is higher than a second preset value, calculating the ratio of the temperature of the milk liquid to the standard temperature, controlling the air valve (24) to decrease the area of the air inlet hole (241) based on the ratio, wherein the first preset value is less than the second preset value.

8. The control method according to claim 2, wherein when determining that a beverage mode corresponding to a current milk beverage preparation signal is a beverage mode indicating steam output, and a beverage mode corresponding to a previous milk beverage preparation signal is a beverage mode limiting steam output, the control method further comprises at least one of the following steps:
reducing PWM duty cycle of the hydraulic pump (23) to decrease milk liquid flow rate;
increasing a pulse ratio of on-duration to off-duration of the electromagnetic pump (34) operation to increase water speed pumped into the electric heating plate;
controlling the air valve (24) to increase an area of an air inlet hole (241).

9. The control method according to claim 2, wherein the milk beverage dispensing system (100, 200) comprises a control valve (38), the delivery pipeline (33) is connected to the control valve (38), a water inlet pipeline (32) is connected between the water supply source (22) and the control valve (38), a heating element (39) is connected to the water inlet pipeline (32), the air valve (24) comprises an outlet conduit (243), the outlet conduit (243) is connected in series between the control valve (38) and the hydraulic pump (23), and the control method further comprises:
receiving a cleaning signal;
controlling the control valve (38) to change direction to connect the water inlet pipeline (32) to the hydraulic pump (23);
controlling the air valve (24) to close and controlling the hydraulic pump (23) to activate, controlling the heating element (39) to heat up, wherein under action of the hydraulic pump (23), hot water in the water inlet pipeline (32) flows through the outlet conduit (243) and then enters the mixing chamber (61), and then is discharged through the discharge outlet (613);
after reaching preset cleaning parameters, controlling the air valve (24) to open, controlling the water inlet pipeline (32) to close,
wherein under action of the hydraulic pump (23), air flows through the outlet conduit (243) and then enters the mixing chamber (61), and then is discharged through the discharge outlet (613);
controlling the hydraulic pump (23) to deactivate after the air valve (24) opens for a sixth preset duration.

10. A beverage machine, comprising a controller, wherein the controller comprises a memory and a processor, the memory stores a computer program, and when the computer program is executed by the processor, **characterized in that**, the computer program is configured to enable the beverage machine to implement the control method for the milk beverage dispensing system (100, 200) according to any one of claims 1 to 9.

11. The beverage machine according to claim 10, wherein the mixing device (260) comprises:
a mixing body (50), defining the mixing chamber (61) arranged along a fluid outflow direction, the fluid inlet (612) is provided at one end of the mixing chamber (61) near the delivery pipeline (33), an output port (513) is provided at another end of the mixing chamber (61) near a beverage outlet (25), the output port (513) is in communication with the discharge outlet (613);
a mixer (40), arranged in the mixing chamber (61);
a buffer tube (70), connected downstream of the mixing body (50), the buffer tube (70) defines a buffer chamber (71) arranged along the fluid outflow direction, the buffer chamber (71) is in communication with the mixing chamber (61) through the output port (513), a baffle plate (72) is provided at an end of the buffer chamber (71) away from the mixer (40), the baffle plate (72) is arranged opposite to the discharge outlet (613) along the fluid outflow direction; multiple through holes (721) are provided on the baffle plate (72), the baffle plate (72) has an intercepting portion (722) corresponding to the discharge outlet (613) along the fluid outflow direction, the multiple through holes (721) are provided around a periphery of the intercepting portion (722); the buffer tube (70) comprises a chamber wall (711) defining the buffer chamber (71), the baffle plate (72) is arranged within the chamber wall (711), the multiple through holes (721) are arranged at intervals from the chamber wall (711).

12. The beverage machine according to claim 11, wherein a flow limiting portion (73) is provided in the buffer chamber (71), the flow limiting portion (73) is arranged adjacent to the output port (513), the flow limiting portion (73) defines a flow limiting channel (731); along the fluid outflow direction, a cross-sectional area of the flow limiting channel (731) is in an increasing trend, or the cross-sectional area of the flow limiting channel (731) shows a trend of first decreasing and then increasing.

13. The beverage machine according to claim 10, wherein the mixing device (160) comprises:
a mixing body (50), defining a fluid inlet channel (522) and the mixing chamber (61) arranged along a fluid outflow direction, the fluid inlet (612) is provided at one end of the fluid inlet channel (522) toward the delivery pipeline (33), the discharge outlet (613) is provided at one end of the mixing body (50) toward a beverage outlet (25), both the fluid inlet (612) and the discharge outlet (613) are in communication with the mixing chamber (61), the fluid inlet channel (522) comprises a first throttling portion (524), the fluid inlet channel (522) has a minimum cross-sectional area at the first throttling portion (524);
a front flow splitting plate (53), arranged in the mixing chamber (61), a first filling space (501) is formed between the fluid inlet channel (522) and the front flow splitting plate (53) for fluid entering the mixing chamber (61);
the front flow splitting plate (53) is arranged downstream of the fluid inlet channel (522), the front flow splitting plate (53) has a first blocking portion (531) corresponding to the fluid inlet channel (522) along the fluid outflow direction, a first flow splitting opening (532) is provided at a side of the first blocking portion (531), along the fluid outflow direction, a projection of the first throttling portion (524) on the first blocking portion (531) is offset from a position of the first flow splitting opening (532).

14. The beverage machine according to claim 10, wherein the mixing device (160) comprises:
a mixing body (50), defining the mixing chamber (61) arranged along a fluid outflow direction, the fluid inlet (612) is provided at one end of the mixing body (50) toward the delivery pipeline (33), the discharge outlet (613) is provided at one end of the mixing body (50) toward a beverage outlet (25), both the fluid inlet (612) and the discharge outlet (613) are in communication with the mixing chamber (61), pressurized fluid from the delivery pipeline (33) enters the mixing chamber (61) through the fluid inlet (612);
at least one fluid channel, arranged between the fluid inlet (612) and the discharge outlet (613), each fluid channel comprises a throttling portion, the fluid channel has a minimum cross-sectional area at the throttling portion;
at least one flow splitting plate, arranged in the mixing chamber (61), the flow splitting plate is arranged downstream of a corresponding fluid channel, the flow splitting plate has a blocking portion corresponding to the fluid channel along the fluid outflow direction, a flow splitting opening is provided at a side of the blocking portion, along the fluid outflow direction, a projection of the throttling portion on the blocking portion is offset from a position of the flow splitting opening.

15. The beverage machine according to claim 10, wherein the milk beverage dispensing system (100, 200) further comprises an air valve (24), the air valve (24) is connected to a delivery pipeline (33) between the milk supply source (21) and the hydraulic pump (23); the beverage machine further comprises a control valve (38), the delivery pipeline (33) is connected to the control valve (38), a water inlet pipeline (32) is connected between a water supply source (22) and the control valve (38), the air valve (24) comprises an air inlet hole (241), an inlet conduit (242) and an outlet conduit (243), the outlet conduit (243) is connected to the air inlet hole (241), the inlet conduit (242) is connected to the outlet conduit (243), a downstream end of the outlet conduit (243) is connected to the delivery pipeline (33), an upstream end of the inlet conduit (242) is connected to the water inlet pipeline (32); external air is configured to sequentially flow through the air inlet hole (241) and the outlet conduit (243) to enter the delivery pipeline (33), water in the water inlet pipeline (32) is configured to sequentially flow through the inlet conduit (242) and the outlet conduit (243) to enter the delivery pipeline (33).
